Europäisches Patentamt

European Patent Office

Office européen des brevets

(19)

(11) Veröffentlichungsnummer: **0 243 523**
**B1**

(12) EUROPÄISCHE PATENTSCHRIFT

(45) Veröffentlichungstag der Patentschrift:
11.07.90

(51) Int. Cl.⁵: **H04N 1/387**

(21) Anmeldenummer: 86105990.5

(22) Anmeldetag: 30.04.86

(54) **Verfahren zur Aufzeichnung von Druckformen.**

(43) Veröffentlichungstag der Anmeldung:
04.11.87 Patentblatt 87/45

(45) Bekanntmachung des Hinweises auf die Patenterteilung:
11.07.90 Patentblatt 90/28

(84) Benannte Vertragsstaaten:
AT BE CH DE FR GB IT LI NL SE

(56) Entgegenhaltungen:
DE-A- 2 137 676
DE-A- 2 729 114
DE-C- 2 708 421
GB-A- 2 102 240
GB-A- 2 117 208
GB-A- 2 130 838
US-A- 4 034 400

(73) Patentinhaber: **DR.-ING. RUDOLF HELL GmbH,**
**Grenzstrasse 1-5, D-2300 Kiel 14(DE)**

(72) Erfinder: **Dölves, Jürgen, Laboer Weg 44a,**
**D-2305 Heikendorf(DE)**

**Beschreibung**

Die vorliegende Erfindung bezieht sich auf das Gebiet der elektronischen Reproduktionstechnik und betrifft ein Verfahren und eine Einrichtung zur bildpunkt- und bildlinienweisen Aufzeichnung von Druckformen, insbesondere für den Mehrfarbendruck, bei denen das zur Steuerung des Aufzeichnungsorgans benötigte Aufzeichnungssignal aus einer Signalquelle abgerufen wird.

Vor der Druckform-Aufzeichnung werden zunächst einzelne Vorlagen für Bilder und Texte, aus denen Druckseiten zusammengestellt werden sollen, in einem Farb-Abtaster optoelektronisch und trichromatisch abgetastet, um Farbsignale zu gewinnen. Ein Farbkorrektur-Rechnur korrigiert die Farbsignale im Falle des Vierfarbendrucks in Farbauszugssignale für die Farbauszüge "Gelb", "Magenta", "Cyan" und "Schwarz". Die Farbauszugssignale geben die erforderlichen Dosierungen der Druckfarben für den Druck an. Die Farbauszugssignale der einzelnen Vorlagen werden in Farbauszugsdaten digitalisiert und zwischengespeichert. Bilder und Texte werden dann nach einem Layoutplan in einer elektronischen Bildverarbeitungsanlage zu den einzelnen Druckseiten montiert und die Farbauszugsdaten sämtlicher Druckseiten eines Druckauftrages in der für die Aufzeichnung benötigten Reihenfolge zunächst in einer Datenquelle zur weiteren Verwendung abgelegt.

Diese Arbeitsschritte erfolgen im allgemeinen lange Zeit vor der Druckform-Aufzeichnung, bei der die Farbauszugsdaten aus der Datenquelle ausgelesen und zur Steuerung des Aufzeichnungsorgans einer Aufzeichnungs-Einrichtung verwendet werden.

Im Falle der Druckform-Aufzeichnung für den Offsetdruck ist die Aufzeichnungs-Einrichtung ein Schwarz/Weiß-Recorder, mit dem die gerasterten Farbauszüge der Druckseiten auf ein Filmmaterial oder direkt auf Druckplatten belichtet werden. Bei der Druck form-Aufzeichnung für den Tiefdruck ist die Aufzeichnungs-Einrichtung dagegen eine Gravieranlage, mit der die gerasterten Farbauszüge der Druckseiten auf Druckzylinder graviert werden.

Das zu lösende Problem soll am Beispiel der Druckform-Aufzeichnung für einen Warenkatalog erläutert werden. Ein Warenkatalog umfaßt eine Vielzahl von Druckseiten und jede Druckseite besteht wiederum aus Warenabbildungen, Warenbeschreibungen, Titel und Preisangaben. In der Praxis kommt es häufig vor, daß bei der Erarbeitung der Farbauszugsdaten für die Datenquelle noch einzelne Bild- oder Textvorlagen fehlen, so daß die betreffenden Druckseiten des Warenkatalogs nicht montiert und die Farbauszugsdaten dieser Druckseiten nicht in den Datenbestand der Datenquelle aufgenommen werden können. Ebenso kommt es vor, daß Druckseiten des Warenkatalogs, deren Farbauszugsdaten im Datenbestand der Datenquelle vorhanden sind, durch ergänzende Informationen aktualisiert oder ganze Druckseiten durch aktuellere Druckseiten ausgetauscht werden müssen. Eine typische Informationsergänzung ist beispielsweise das nachträgliche Einkopieren von aktuellen Schriften, Titeln, Preisen usw. auf den Hintergrund einer Druckseite.

Bei derartigen aktuellen Änderungen und/oder Ergänzungen eines Druckauftrages war es bisher erforderlich, die elektronische Seitenmontage mit den geänderten oder aktualisierten Bildern und Texten zu wiederholen, die neuen Farbauszugsdaten in den Datenbestand der Datenquelle zu übernehmen und den gesamten Datenbestand durch einen Sortierlauf zu überarbeiten. Da die Vorlagen der aktuellen Bilder und Texte in den meisten Fällen Filmvorlagen sind, bei der elektronischen Seitenmontage aber mit Farbauszugsdaten, also filmlos, gearbeitet wird, müssen die aktuellen Vorlagen dann auch noch vor der elektronischen Seitenmontage durch optische Abtastung und Digitalisierung in Farbauszugsdaten umgewandelt werden. Diese Vorgehensweise ist zeitaufwendig und bei der geforderten Aktualität in der Druckindustrie kaum vertretbar.

Aufgabe der vorliegenden Erfindung ist es daher, zur Behebung der genannten Nachteile ein Verfahren zur Aufzeichnung von Druckformen und einer Aufzeichnungs-Einrichtung anzugeben, mit denen direkt bei der Druckform-Aufzeichnung aktuelle Änderungen und/oder Ergänzungen von Informationen auf Druckseiten oder Ergänzungen ganzer Druckseiten eines Druckauftrages schnell, mit hoher Genauigkeit und ohne zeitraubende Überarbeitung der bereits in der Datenquelle abgelegten Farbauszugsdaten durchgeführt werden können.

Diese Aufgabe wird in bezug auf das Verfahren durch die Merkmale der Patentansprüche 1 und 14 und in bezug auf die Aufzeichnungs-Einrichtung durch die Merkmale der Patentansprüche 23 und 24 gelöst.

Aus der DE-B 2 708 421 ist bereits ein Verfahren zum Mischen von analogen Bildsignalen bei der Druckform-Aufzeichnung bekannt, mit dem insbesondere verlaufende Übergänge an einkopierten Bildern erzielt werden. Dort werden direkt bei der Druckform-Aufzeichnung durch optoelektronische Abtastung von Vorlagen die zu mischenden Bildsignale und durch zusätzliche optoelektronische Abtastung einer Steuermaske ein die Bildmischung steuerndes Maskensignal gewonnen. Die Signalmischung erfolgt durch Multiplikation des ersten zu mischenden Bildsignals mit dem Maskensignal, durch Multiplikation des zweiten zu mischenden Bildsignals mit dem in der Amplitude invertierten Maskensignal und durch Addition der resultierenden Signale zum Aufzeichnungssignal. Dieses Verfahren ist nicht zum schnellen und genauen Ändern und Ergänzen von aktuellen Informationen auf Druckseiten geeignet, da in zeitraubender Arbeit jeweils eine Steuermaske angefertigt werden muß. Erfahrungsgemäß läßt es sich auch bei genauer Maskenherstellung nicht vermeiden, daß gelegentlich störende Säume oder Ränder an einkopierten Bereichen Auftreten.

Aus der DE-B 2 137 676 ist ein Verfahren zur Reproduktion von Bildern bekannt, bei dem vor der Druckform-Aufzeichnung durch optoelektronische Abtastung von Vorlagen Bildsignale und durch optoelektronische Abtastung einer Steuermaske ein Maskensignal erzeugt und die digitalisierten Signale in Speichern abgelegt werden. Während eines ebenfalls vor der Druckform-Aufzeichnung durchgeführten Arbeitsschrittes werden dann die Speicher ausgelesen und die Bildsignale mit dem Maskensignal rechnerisch zu einem kombinierten Aufzeichnungssignal verknüpft, das bis zur Druckform-Aufzeichnung wiederum in einem Speicher abgelegt wird. Auch dieses Verfahren ist nicht für eine schnelle und genaue Änderung und/oder Ergänzung von Informationen direkt bei der Druckform-Aufzeichnung ohne entsprechende Änderung des Datenbestandes geeignet. Außerdem ist auch dort die Herstellung einer genauen Steuermaske erforderlich.

In der GB-A 2 117 208 wird ein Verfahren und eine Einrichtung zur Bild- und Text-Integration auf einer Druckseite beschrieben. Eine Bildvorlage wird abgetastet und die dabei gewonnenen Farbdaten der vier Farbauszüge und ein Bild-Steuerbit werden zu Datenwörtern einer Bild Aufzeichnungsdatenfolge zusammengefaßt. Eine Textvorlage wird mit einer höheren Auflösung als bei der Bildabtastung abgetastet und die dabei erzeugten Bilddaten und ein Text-Steuerbit ebenfalls zu Datenwörtern einer Text-Aufzeichnungsdatenfolge zusammengefaßt. Die Bild-Aufzeichnungsdatenfolge und die Text-Aufzeichnungsdatenfolge werden durch die repräsentativen Steuerbits voneinander getrennt und unterschiedlich weiterverarbeitet bevor sie zur Steuerung des Aufzeichnungsorgans verwendet werden, wobei die Aufzeichnung des Textes zur verbesserten Wiedergabe mit höherer Auflösung als die Bildaufzeichnung erfolgt. Bei diesem Verfahren werden zwar auch verschiedene Signalfolgen in Abhängigkeit von Steuerbits maskiert und zu einer Aufzeichnungssignalfolge kombiniert aber das Verfahren ist ebenfalls nicht geeignet, Druckseiten durch aktuelle Druckseiten zu ersetzen und/oder aktuelle Informationen auf Druckseiten zu ergänzen, da die Steuerbits dort nur zwischen Bild und Text unterscheiden können. Als weiterer Nachteil wird angesehen, daß ein Bit oder mehrere Bits eines Datenwortes als Steuerinformation verwendet werden müssen, wodurch der zur Codierung der aufzuzeichnenden Information zur Verfügung stehende Bereich eingeschränkt ist.

Die Erfindung wird im folgenden anhand der Figuren 1 bis 6 näher erläutert. Es zeigen:

Fig. 1 ein Blockschaltbild einer Gravieranlage;
Fig. 2 Verläufe von Strich-Gradationen;
Fig. 3 ein Schema für den Schalt-Betrieb der Gravieranlage;
Fig. 4 ein Schema für den Überlagerungs-Betrieb der Gravieranlage;
Fig. 5 eine grafische Darstellung zum Einkopieren und
Fig. 6 eine Gravieranlage zur Gravur von mehreren Strängen.

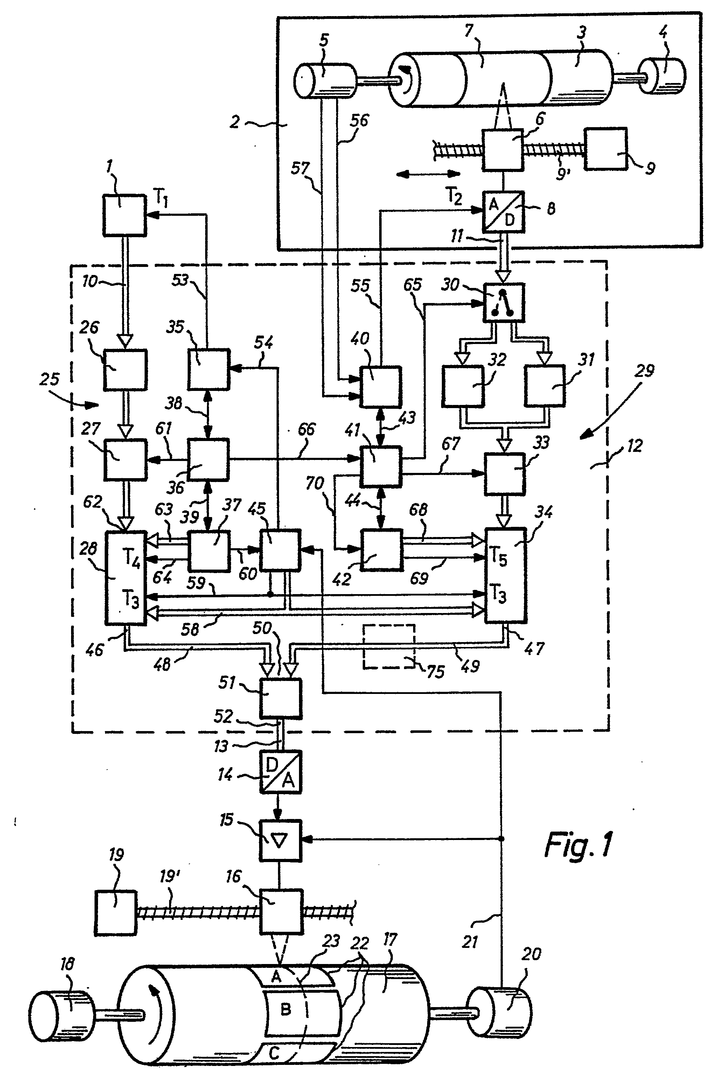

Fig. 1 zeigt das prinzipielle Blockschaltbild einer Aufzeichnungs-Einrichtung für Druckformen. Im dargestellten Beispiel ist die Aufzeichnungs-Einrichtung die Graviereinheit oder die separate Graviermaschine einer elektronischen Gravieranlage zur Gravur von gerasterten Farbauszügen auf Druckzylin-dern für den Tiefdruck. Die Aufzeichnungs-Einrichtung kann aber auch ein beliebiger Recorder zur punkt- und zeilenweisen Aufzeichnung von Druckformen auf Filmmaterial oder zur Direkt-Aufzeichnung von Druckformen sein.

Die Graviereinheit wird aus mindestens zwei Datenquellen gespeist.

Im Ausführungsbeispiel ist die erste Datenquelle eine Speichereinrichtung 1 (Plattenstapel, Magnetband, usw.), in der die Farbauszugsdaten der einzelnen Farbauszüge für die Gravur nahezu sämtlicher Druckseiten eines Druckauftrages bildpunkt- und bildlinienweise abrufbar gespeichert sind.

Zur Gewinnung der in der Speichereinrichtung 1 abgelegten Farbauszugsdaten wurden zunächst entsprechend dem Layout der einzelnen Druckseiten eine Vielzahl von Bild- und Test-Vorlagen in einem Farb-Abtaster optoelektronisch und trichromatisch abgetastet und die dabei gewonnenen Farbsignale durch eine Farbkorrektur nach den beim Mehrfarbendruck geltenden Gesetzmäßigkeiten der subtraktiven Farbmischung in Farbauszugssignale und anschließend durch eine Analog/Digital-Wandlung in Farbauszugsdaten umgewandelt. Die einzelnen Bilder und Texte wurden dann nach den Layout-Plänen der Druckseiten beispielsweise in einer elektronischen Bildverarbeitungsanlage durch Kombination der Farbauszugsdaten zu ganzen Druckseiten montiert und die kombinierten Farbauszugsdaten bildpunkt- und bildlinienweise in der Speichereinrichtung 1 abgelegt.

In der Speichereinrichtung 1 können anstelle der Farbauszugsdaten auch durch Abtastung von Schwarz/Weiß-Vorlagen gewonnene Bilddaten abgelegt sein, so daß nachfolgend allgemein von den Bilddaten der Speichereinrichtung 1 gesprochen wird, die z.B. jeweils eine Wortlänge von 8 Bit haben mögen.

Wie in der Beschreibungseinleitung erläutert, können in der Speichereinrichtung 1 die Bilddaten einzelner Druckseiten fehlen, und zwar von denjenigen Druckseiten, für die die Bilder und/oder Texte zum Zeitpunkt der Aufbereitung der Bilddaten noch nicht zur Verfügung standen.

Die zweite Datenquelle ist im Ausführungsbeispiel als Abtaster 2 für Schwarz/Weiß-Vorlagen oder ungerasterte oder gerasterte Farbauszüge ausgebildet. Der Abtaster 2 ist zum Beispiel die Abtasteinheit oder die separate Abtastmaschine der elektronischen Gravieranlage.

Dieser Abtaster 2 besteht aus einer Abtasttrommel 3, die durch einen Motor 4 angetrieben wird, einem mit der Trommelwelle verbundenen Impulsgeber 5, einem optoelektronischen Abtastorgan 6 zur Gewinnung eines Bildsignals durch punkt- und bildlinienweise Abtastung einer auf der Abtasttrommel 3 angeordneten Vorlage 7 und einem an das Abtastorgan 6 angeschlossenen A/D-Wandler 8, welcher das Bildsignal in Bilddaten mit beispielsweise einer Wortlänge von 10 Bit digitalisiert. Mit Hilfe einer Vorschubeinrichtung, bestehend aus einem Vorschubmotor 9 und einer Spindel 9', wird das Abtastorgan 6 während der Vorlagen-Abtastung axial an der Abtasttrommel 3 entlang bewegt. Der Impulsgeber 5 erzeugt bei jeder Umdrehung der Abtasttrommel 3 ein Signal "Abtastbeginn", welches den gewünschten Abtastbeginn auf der Vorlage 7 markiert.

Die zweite Datenquelle (2) kann aber auch ein Farb-Abtaster oder eine Speichereinrichtung sein, in der die durch optoelektronische Abtastung einer Vorlage und Digitalisierung gewonnenen Bilddaten zwischengespeichert sind.

Nach der Erfindung liefert der Abtaster 2 die nicht in der Speichereinrichtung 1 abgelegten, aktuellen Bilddaten, die online bei der Gravur der Druckform berücksichtigt werden sollen.

Gemäß einer in der Beschreibungseinleitung erläuterten Reproduktionsaufgabe bei der Druckform-Gravur liefert der Abtaster 2 die aktuellen Bilddaten einer ganzen Druckseite, die eine im Datenbestand der Speichereinrichtung 1 enthaltene Druckseite auf der Druckform ersetzen oder anstelle einer Leerseite auf der Druckform hinzugefügt werden soll. In diesem Falle ist die im Abtaster 2 abgetastete Vorlage 7 eine aktuelle Druckseiten-Vorlage mit Halbton- und Strichbereichen, und an der Gravur der Druckform werden von Druckseite zu Druckseite wechselnd die eine oder andere Datenquelle(1 od. 2) beteiligt, nachfolgend mit Schalt-Betrieb bezeichnet.

Gemäß einer anderen Reproduktionsaufgabe liefert der Abtaster 2 die aktuellen Bilddaten einer Strich-Information, z. B. einer Schrift, die auf der Druckform in den Hintergrund einer im Datenbestand der Speichereinrichtung 1 enthaltenen Druckseite einkopiert werden soll. In diesem Falle ist die im Abtaster 2 abgetastete Vorlage 7 eine Strich-Vorlage, und an der Gravur der Druckform sind zum Zeitpunkt des Einkopierens gleichzeitig beide Datenquellen (1 od. 2) beteiligt, nachfolgend mit Überlagerungs-Betrieb bezeichnet.

Die aus der Speichereinrichtung 1 und dem Abtaster 2 ausgelesenen Bilddaten-Folgen werden über Daten-Busse 10 und 11 einer Signalverarbeitungs-Schaltung 12 der Graviereinheit zugeführt, in der aus den Bilddaten-Folgen eine resultierende Aufzeichnungsdaten-Folge auf einem Daten-bus 13 erzeugt wird.

Die resultierende Aufzeichnungsdaten-Folge wird in einem D/A-Wandler 14 in ein analoges Aufzeichnungssignal umgewandelt und in einem Gravierverstärker 15 verstärkt. In dem Gravierverstärker 15 wird dem Aufzeichnungssignal ein das zu gravierende Druckraster bestimmendes Rastersignal überlagert. Das aus Aufzeichnungssignal und Rastersignal gebildete Graviersignal steuert z. B. ein elektromagnetisches Gravierorgan 16 mit einem Gravierstichel als Schneidwerkzeug. Der Gravierstichel graviert Bildlinie für Bildlinie eine Folge von im Druckraster angeordneten Näpfchen in einen Druckzylinder 17. Während das Rastersignal eine vibrierende Hubbewegung des Gravierstichels zur Erzeugung des Druckrasters bewirkt, steuert das Aufzeichnungssignal die Eindringtiefe des Gravierstichels in die Oberfläche des Druckzylinders 17 und damit die Tiefen der gravierten Näpfchen bzw. die gravierten Tonwerte zwischen "Schwarz" und "Weiß". Der Druckzylinder 17 wird durch einen Motor 18 angetrieben. Das Gravierorgan 16 wird mit Hilfe einer Vorschubeinrichtung bestehend aus einem Motor 19 und einer Spindel 19' axial an dem Druckzylinder 17 vorbeigeführt. Ein mit der Welle des Druckzylinders 17 gekoppelter Impulsgeber 20 erzeugt ein Sychronsignal auf einer Leitung 21.

Die Drehbewegungen der Abtasttrommel 3 des Abtasters 2 und des Druckzylinders 17 sind in geeigneter Weise miteinander synchronisiert. Wenn der Abtaster 2 die integrierte Abtasteinheit der Gravieranlage ist, sind Abtasttrommel 3 und Druckzylinder 17 durch eine Welle mechanisch gekoppelt, und einer der Antriebsmotore kann entfallen. Wenn der Abtaster 2 die separate Abtastmaschine der Gravieranlage oder ein beliebiger Abtaster ist, wird die Synchronisierung der Drehbewegungen zum Beispiel durch frequenzgesteuerte Umrichter-Antriebe für Abtasttrommel 3 und Druckzylinder 17 erreicht. Das elektromagnetische Gravierorgan 16 kann auch ein durch das Graviersignal modulierter Laser- oder Elektronen-Strahlerzeuger sein.

Nähere Einzelheiten über Aufbau und Wirkungsweise einer solchen Gravieranlage können der DE-C 25 08 734 entnommen werden.

Auf dem Druckzylinder 17 sind z. B. drei Druckseiten 22, mit A, B und C bezeichnet, angedeutet, die in Umfangsrichtung des Druckzylinders 17 hintereinander graviert werden sollen. Jede gravierte Bildlinie 23 (Umfangslinie) setzt sich jeweils aus drei Teilbildlinien der einzelnen Druckseiten 22 zusammen.

Ein Zylinder-Zuordnungsschema, auch Ausschießschema oder Zylinderlayout genannt, das von einem Reproduktionsfachmann erstellt wird, legt die gewünschten Positionen der Druckseiten 22 zueinander und auf dem Druckzylinder 17 fest.

In ebenfalls vom Reproduktionsfachmann angefertigten Quellen-Zuordnungsschemata für die Speichereinrichtung 1 und den Abtaster 2 wird für jede Druckseite markiert, ob diese aus den Bilddaten der Speichereinrichtung 1 oder des Abtasters 2 (Schalt-Betrieb) oder aber aus den Bilddaten beider Datenquellen (Überlagerungs-Betrieb) aufgezeichnet werden soll. Beispielsweise soll die Druckseite A aus den Bilddaten der Speichereinrichtung 1, die Druckseite B aus den aktuellen Bilddaten des Abtasters 2 und die Druckseite C aus den Bilddaten beider Datenquellen aufgezeichnet werden, was der Fall ist, wenn zum Beispiel in den Hintergrund der Druckseite C eine aktuelle Schrift einzukopieren ist.

Mit Hilfe dieser Quellen-Zuordnungsschemata wird somit festgelegt, welche Bilddaten jeweils als aufzuzeichnende Informationen (gültige Bilddaten) gelten und welche Bilddaten unberücksichtigt bleiben sollen (ungültige Bilddaten).

Nachfolgend werden der Aufbau der Signalverarbeitungs-Schaltung 12 sowie ihre Wirkungsweise bei den unterschiedlichen Reproduktionsaufgaben näher erläutert.

Der Signalweg 25 für die Bilddaten-Folge aus der Speichereinrichtung 1 besteht aus einer Gradations-Stufe 26 mit einer Halbton-Gradation, einem Masken-Register 27 und einer Bildlinien-Speichereinrichtung 28. Der Signalweg 29 für die Bilddaten-Folge aus dem Abtaster 2 weist einen elektronischen Umschalter 30, eine Gradations-Stufe 31 mit einer Halbton-Gradation, eine weitere Gradations-Stufe 32 mit einer Strich-Gradation, ein Masken-Register 33 sowie ebenfalls eine Bildlinien-Speichereinrichtung 34 auf.

Jede Bildlinien-Speichereinrichtung 28 bzw. 34 kann die Gravierinformationen für die Näpfchen einer ganzen Bildlinie 23 speichern, wobei jedem Speicherplatz ein Gravierort in der Bildlinie 23 auf dem Druckzylinder 17 zugeordnet ist. Die Bildlinien-Speichereinrichtungen 28 und 34 sind in zweckmäßiger Weise als Wechselspeicher mit jeweils mindestens zwei Speicherbereichen ausgebildet. Die Gravierinformationen der einzelnen Bildlinien werden dadurch abwechselnd in die beiden Speicherbereiche eingeschrieben und auch im Wechsel aus den Speicherbereichen ausgelesen. Auf diese Weise können beim Einschreiben der Gravierinformationen für eine Bildlinie in einen der Speicherbereiche bereits die Gravierinformationen der vorangegangenen Bildlinie aus dem anderen Speicherbereich ausgelesen und graviert werden, wodurch die Gravierzeit für den Druckzylinder 17 erheblich reduziert wird.

Zur Signalsteuerung im Signalweg 25 gehören ferner ein Lese-Steuerwerk 35 für die Speichereinrichtung 1, ein Zuordnungs-Steuerwerk 36 und ein Schreib-Steuerwerk 37 für die Bildlinien-Speichereinrichtung 28. Lese-Steuerwerk 35, Zuordnungs-Steuerwerk 36 und Schreib-Steuerwerk 37 sind über Leitungen 38 und 39 miteinander synchronisiert. Zu dem Signalweg 29 gehören ebenfalls ein Lese-Steuerwerk 40 für den Abtaster 2, ein Zuordnungs-Steuerwerk 41 und ein Schreib-Steuerwerk 42 für die Bildlinien-Speichereinrichtung 34, die über die Leitungen 43 und 44 miteinander synchronisiert sind.

Ferner ist ein gemeinsames Lese-Steuerwerk 45 für die Bildlinien-Speichereinrichtungen 28 und 34 vorgesehen.

Die Daten-Ausgänge 46 und 47 der Bildlinien-Speichereinrichtungen 28 und 34 sind über Daten-Busse 48 und 49 mit dem Adreß-Eingang 50 einer Verknüpfungs-Stufe 51 verbunden. Der Daten-Ausgang 52 der Verknüpfungs-Stufe 51 bildet den Ausgang der Signalverarbeitungs-Schaltung 12, der über den Daten-Bus 13 mit dem Eingang des D/A-Wandlers 14 verbunden ist.

Während der Gravur des Druckzylinders 17 werden die Bilddaten-Folgen bildpunkt- und bildlinienweise online aus der Speichereinrichtung 1 und/oder aus dem Abtaster 2 ausgelesen und verarbeitet.

Zum Auslesen der Speichereinrichtung 1 erzeugt das Lese-Steuerwerk 35 eine ein- und ausschaltbare Lese-Taktfolge $T_1$, die der Speichereinrichtung 1 über eine Leitung 53 zugeführt wird. Diese Lese-Taktfolge $T_1$ wird jeweils nach dem Einschreiben der Daten einer Bildlinie in die Bildlinien-Speichereinrichtung 28 ausgeschaltet und erst dann wieder zum Einschreiben der Daten der folgenden Bildlinie eingeschaltet, wenn ein Speicherbereich der Bildlinien-Speichereinrichtung 28 neue Daten Aufnehmen kann. Dieser Zustand wird dem Lese-Steuerwerk 35 über eine Leitung 54 vom Lese-Steuerwerk 45 signalisiert.

Zum Auslesen des Abtasters 2 erzeugt das Lese-Steuerwerk 40 eine weitere ein- und ausschaltbare Lese-Taktfolge $T_2$, die dem A/D-Wandler 8 des Abtasters 2 als Sampletakt über eine Leitung 55 zugeführt wird. Der Impulsgeber 5 des Abtasters 2 gibt bei jeder Umdrehung der Abtasttrommel 3 bzw. beim Abtastbeginn auf jeder Bildlinie der Vorlage 7 das Signal "Abtastbeginn" ab, das über eine Leitung 56 an das Lese-Steuerwerk 40 gegeben wird. Jedes Signal "Abtastbeginn" leitet den Lesevorgang für die Bilddaten einer abgetasteten Bildlinie ein, indem im Lese-Steuerwerk 40 mit dem Signal "Abtastbeginn" die Lese-Taktfolge $T_2$ gestartet wird. Das Auslesen der Bilddaten aus dem Abtaster 2 wird am Ende jeder abgetasteten Bildlinie gestoppt, indem der Impulsgeber 5 zusätzlich ein Signal "Abtastende" am gewünschten Bildlinienende abgibt, welches dem Lese-Steuerwerk 40 über eine Leitung 57 zugeführt wird und dort die Lese-Taktfolge $T_2$ unterbricht.

Das Auslesen der Bilddaten aus der Speichereinrichtung 1, ihre Bearbeitung und das Einschreiben der bearbeiteten Daten in die Bildlinien-Speichereinrichtung 28 erfolgen synchron, ebenso das Auslesen der Bilddaten aus dem Abtaster 2, die Bearbeitung und das Einschreiben in die Bildlinien-Speichereinrichtung 34. Dagegen sind die Lesevorgänge der Bilddaten aus der Speichereinrichtung 1 und dem Abtaster 2 nicht synchronisiert, sondern den Erfordernissen angepaßt, wobei die beiden Bildlinien-Speichereinrichtungen 28 und 34 gleichzeitig als Datenpuffer dienen. Das Auslesen der in den beiden Bildlinien-Speichereinrichtungen 28 und 34 zwischengespeicherten Daten einer zu gravierenden Bildlinie erfolgt synchron mit der Rastersignal-Erzeugung im Gravierverstärker 15 und mit der Drehbewegung des Druckzylinders 17 bzw. mit der Gravur der Näpfchen. Dazu wird das im Impulsgeber 20 gebildete Synchronsignal über die Leitung 21 an den Gravierverstärker 15 und an das gemeinsame Lese-Steuerwerk 45 für die Bildlinien-Speichereinrichtungen 28 und 34 gegeben.

Das Lese-Steuerwerk 45 erzeugt die gemeinsamen Lese-Adressen für beide Bildlinien-Speichereinrichtungen 28 und 34 auf dem Adreß-Bus 58 und auch eine gemeinsame Lese-Taktfolge $T_3$ auf einer Leitung 59. Die Lese-Taktfolge $T_3$ wird jeweils dann gestartet, wenn in die Bildlinien-Speichereinrichtung 28 jeweils die Daten einer ganzen Bildlinie eingeschrieben sind. Dieser Zustand wird dem Lese-Steuerwerk 45 über eine Leitung 60 vom Schreib-Steuerwerk 37 signalisiert.

Der detaillierte Aufbau der Bildlinien-Speichereinrichtungen sowie die zugehörige Speichersteuerung wird ausführlich in der bereits genannten DE-C 25 08 734 erläutert, so daß an dieser Stelle auf eine nähere Beschreibung verzichtet werden kann.

Die Wirkungsweise der Signalverarbeitungs-Schaltung 12 ist nun folgende:

Die mit Hilfe der Lese-Taktfolge $T_1$ aus der Speichereinrichtung 1 ausgelesenen Bilddaten mit einer Wortlänge von jeweils 8 Bit und einem Wertebereich von beispielsweise 0 bis 255 oder einem begrenzten Wertebereich von 1 bis 254 werden in der Gradations-Stufe 26 nach einer vorgegebenen Halbton-Gradation derart modifiziert, daß am Ausgang der Gradation-Stufe 26 Bilddaten von ebenfalls 8 Bit Wortlänge und einem Wertebereich von beispielsweise 1 (Schwarz) bis 254 (Weiß) auftreten, wobei der Wert 255 durch den Verlauf der Halbton-Gradation oder bereits durch den begrenzten Wertebereich der Speichereinrichtung 1 aus später erläuterten Gründen ausgeschlossen ist.

Die modifizierten Bilddaten werden nacheinander Bilddatum für Bilddatum in dem Masken-Register 27 zwischengespeichert.

In das Zuordnungs-Steuerwerk 36 wurde zuvor das erstellte Quellen-Zuordnungsschema für die Speichereinrichtung 1 einprogrammiert, in dem, wie bereits zuvor erklärt wurde, festgelegt ist, welche Bilddaten der Speichereinrichtung 1 als Gravierinformationen (gültige Bilddaten) gelten und welche unberücksichtigt bleiben sollen (ungültige Bilddaten oder Maskendaten).

Entsprechend dem einprogrammierten Quellen-Zuordnungsschema erzeugt das Zuordnungs-Steuerwerk 36 immer dann ein Maskensignal auf einer Leitung 61, wenn ein im Masken-Register 27 zwischengespeichertes Bilddatum als für die Gravur ungültiges Bilddatum gelten soll. In diesem Falle bewirkt das Maskensignal auf der Leitung 61, daß das betreffende Bilddatum durch ein Maskendatum mit einem konstanten Wert von beispielsweise 255 ersetzt wird. Erfindungsgemäß ist dieser Wert des Maskendatums so gewählt, daß er außerhalb des die eigentlichen Gravierinformationen enthaltenen Wertebereiches der Bilddaten liegt.

Handelt es sich dagegen bei einem im Masken-Register 27 zwischengespeicherten Bilddatum um ein gültiges Bilddatum, unterbleibt das Maskensignal, und das Bilddatum wird nicht beeinflußt.

Bilddaten und Maskendaten einer Bildlinie werden in der durch die Speichereinrichtung 1 und das zugehörige Quellen-Zuordnungsschema bestimmten Reihenfolge bildpunktweise über den Daten-Eingang 62 in die Bildlinien-Speichereinrichtung 28 eingeschrieben. Dazu erzeugt das Schreib-Steuerwerk 37 die entsprechenden Schreib-Adressen auf einem Adreß-Bus 63 und eine Schreib-Taktfolge $T_4$ auf einer Leitung 64.

Die aus dem Abtaster 2 ausgelesenen Bilddaten gelangen zunächst auf den elektronischen Umschalter 30, der, wie später noch erläutert wird, durch das Quellen-Zuordnungsschema des Abtasters 2 umschaltbar ist. Dazu erzeugt das Zuordnungs-Steuerwerk 41 ein entsprechendes Steuersignal, das dem elektronischen Umschalter 30 über eine Leitung 65 zugeführt wird.

Der elektronische Umschalter 30 wird so umgeschaltet, daß die Bilddaten des Abtasters 2 bei Schalt-Betrieb auf die Gradations-Stufe 31 mit einer Halbton-Gradation und bei Überlagerungs-Betrieb auf die Gradations-Stufe 32 mit einer Strich-Gradation gelangen. Ist dagegen ein von zu gravierender Druckseite zu gravierender Druckseite wechselnder Betrieb vorgesehen, wird der elektronische Umschalter 30 laufend umgeschaltet. In diesem Falle wird die Umschaltung zusätzlich vom Quellen-Zuordnungsschema der Speichereinrichtung 1 gesteuert, wozu das Zuordnungs-Steuerwerk 41 ein entsprechendes Signal über eine Leitung 66 vom Zuordnungs-Steuerwerk 36 erhält.

Schalt-Betrieb

Im Schalt-Betrieb, bei dem im Abtaster 2 eine Druckseiten-Vorlage mit Halbton- und Strichbereichen abgetastet wird, gelangen die Bilddaten mit einer Wortlänge von 10 Bit auf die Gradations-Stufe 31 und werden dort entsprechend der Halbton-Gradation in Bilddaten mit einer Wortlänge von ebenfalls 8 Bit und einem Wertebereich von 1 (Schwarz) bis 254 (Weiß) umcodiert, wobei der Wert 255 als Gravierinformation wiederum ausgeschlossen ist.

In das Zuordnungs-Steuerwerk 41 wurde ebenfalls bereits das für den Abtaster 2 aufgestellte Quellen-Zuordnungsschema einprogrammiert. Die modifizierten Bilddaten gelangen auf das Masken-Register 33, in dem, wie bereits beim Masken-Register 27 des Signalweges 25 erläutert, gemäß dem Quellen-Zuordnungsschema für den Abtaster 2 ungültige Bilddaten mit Hilfe eines Maskensignals auf einer Leitung 67 durch Maskendaten ersetzt werden und gültige Bilddaten unbeeinflußt bleiben.

Bilddaten und Maskendaten jeder Bildlinie der abgetasteten Druckseite werden unter denjenigen Adressen der Bildlinien-Speichereinrichtung 34 eingeschrieben, die der durch das Quellen-Zuordnungsschema des Abtasters 2 bzw. durch das Zylinder-Zuordnungsschema festgelegten Gravierposition der betreffenden Bildlinie bzw. Druckseite auf dem Druckzylinder 17 entspricht.

Das Schreib-Steuerwerk 42 erzeugt dazu die entsprechenden Schreib-Adressen auf einem Adreßbus 68 und eine Schreib-Taktfolge $T_5$ auf einer Leitung 69. Das Quellen-Zuordnungsschema des Abtasters 2 enthält dafür zusätzlich die Angabe über die erforderliche Anfangs-Adresse für die Bilddaten der Druckseite in der Bildlinien-Speichereinrichtung 34, die dem Schreib-Steuerwerk 42 über eine Leitung 70 vom Zuordnungs-Steuerwerk 41 mitgeteilt wird.

<u>Überlagerungs-Betrieb</u>

Im Überlagerungs-Betrieb wird in dem Abtaster 2 eine Strich-Vorlage mit positiven, negativen oder gemischt positiven/negativen Strichelementen abgetastet, und die dabei gewonnenen Bilddaten gelangen über den umgeschalteten elektronischen Umschalter 30 auf die Gradations-Stufe 32. Die Gradations-Stufe 32 enthält entsprechend der abgetasteten Strich-Vorlage eine Strich-Gradation für positive, für negative oder für gemischt positive und negative Strichelemente. Die Gradations-Stufe 32 kann aber auch alle drei unterschiedlichen Strich-Gradationen enthalten. In diesem Falle wird die jeweils erforderliche Strich-Gradation durch einen Befehl oder aber auch automatisch anhand des Quellen-Zuordnungsschemas des Abtasters 2 ausgewählt, wenn im Abtaster 2 gleichzeitig unterschiedliche Vorlagen-Arten abgetastet werden.

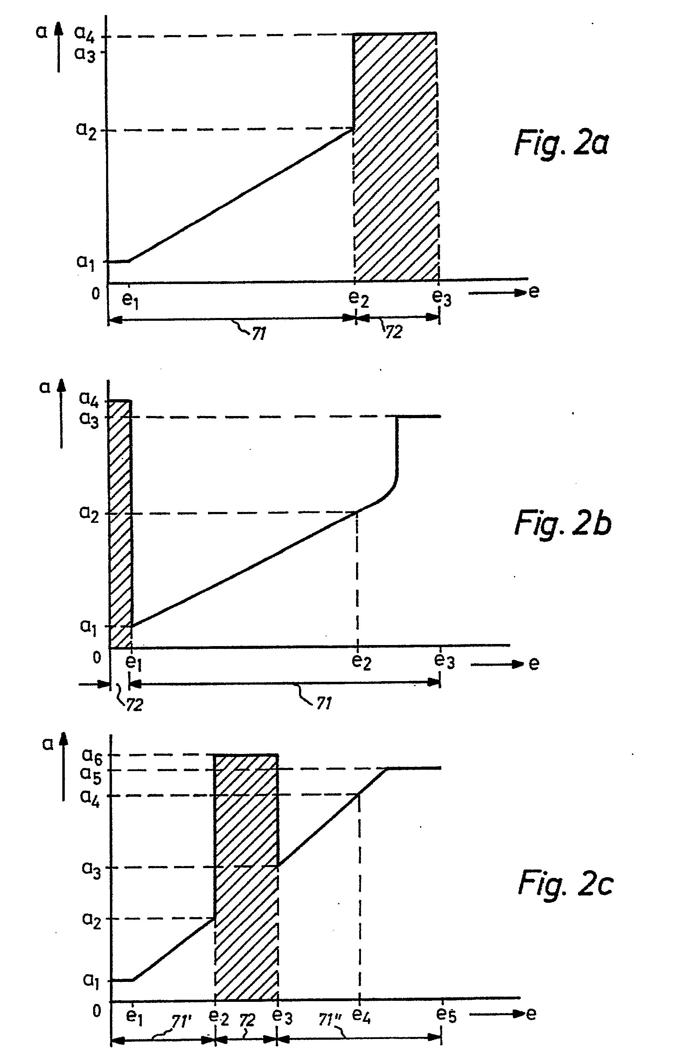

Erfindungsgemäß ist die Strich-Gradation so ausgebildet, daß bei der Vorlagen-Abtastung im Abtaster 2 eine selbsttätige Maskierung der Strich-Vorlage erfolgt, indem bestimmte Dichtebereiche der Vorlage als zu gravierende Informationen (gültige Bilddaten) und andere Dichtebereiche als Maske (ungültige Bilddaten) interpretiert werden. Dazu ist der Eingangs-Wertebereich und der Ausgangs-Wertebereich der Strich-Gradation jeweils in einen Informations-Bereich zwischen "Schwarz" und "Weiß" und in einen Masken-Bereich unterteilt. Bilddaten der abgetasteten Strich-Vorlage, die in den eingangsseitigen Informations-Bereich fallen, werden als gültige Bilddaten interpretiert und dem Verlauf der Gradationskurve entsprechend wertemäßig in Bilddaten des ausgangsseitigen Informations-Bereiches umgesetzt. Dagegen werden alle Bilddaten der abgetasteten Strich-Vorlage, die in den eingangsseitigen Masken-Bereich fallen, als ungültige Bilddaten interpretiert und in das Maskendatum für den ganzen ausgangsseitigen Masken-Bereich umgesetzt. Gleichzeitig erfolgt mit Hilfe der Strich-Gradation eine Umcodierung der Bilddaten von 10 Bit auf 8 Bit. Fig. 2 zeigt Verläufe der erfindungsgemäßen Strich-Gradationen für positive, negative und gemischt positive und negative Strichelemente.

Während die Quellen-Zuordnungsschemata im wesentlichen die Erzeugung der Maskendaten für ganze Druckseiten steuern, werden mit Hilfe der erfindungsgemäßen Strich-Gradationen selbsttätig zusätzliche Maskendaten für die abgetastete Strich-Vorlage derart gewonnen, daß tatsächlich nur die Bilddaten der zu gravierenden Strichelemente weitergeleitet und die Bilddaten des Vorlagenuntergrundes unterdrückt werden.

Auch die von der Gradations-Stufe 32 ausgegebenen Bilddaten und Maskendaten durchlaufen das Masken-Register 33 und werden in die Bildlinien-Speichereinrichtung 34, wie beschrieben, eingeschrieben.

Durch das synchrone Auslesen der beiden Bildlinien-Speichereinrichtungen 28 und 34 erscheinen Bild- und/oder Maskendaten eines Bildpunktes bzw. eines zu gravierenden Näpfchens gleichzeitig am Adreß-Eingang 50 der Verknüpfungs-Stufe 51. Die gleichzeitig eintreffenden Daten werden am Adreß-Eingang 50 zu einer Eingangs-Adresse mit einer Wortlänge von 16 Bit zusammengefaßt. Beispielsweise bilden die Daten des Abtasters 2 die niederwertigen Bits von $2^0$ bis $2^7$ und die Daten der Speichereinrichtung 1 die hochwertigen Bits von $2^8$ bis $2^{15}$ der Eingangs-Adresse.

Erfindungsgemäß bestimmt jeweils das an der Bildung einer Eingangs-Adresse beteiligte Maskendatum eines Bildpunktes oder Näpfchens, ob die Gravierinformation für das betreffende Näpfchen aus den Bilddaten der einen oder anderen Datenquelle gebildet werden soll. Weist die Eingangs-Adresse dagegen kein Maskendatum auf, so wird die Gravierinformation für das betreffende Näpfchen aus den Bilddaten beider Datenquellen gebildet.

Die Verknüpfungs-Stufe 51 ist als Look-up-Table (LUT) aufgebaut Die Verknüpfungs-Stufe 51 enthält für jede mögliche Kombination von Bilddaten und/oder Maskendaten am Adreß-Eingang 50 der Verknüpfungs-Stufe 51 bzw. für jede Eingangs-Adresse ein Aufzeichnungsdatum mit einer Wortlänge von 8 Bit, welches die gewünschte Gravierinformation für das betreffende Näpfchen darstellt.

Für die Bildung der Eingangs-Adressen der Verknüpfungs-Stufe 51 aus Bilddaten und Maskendaten ergeben sich folgende Möglichkeiten:

Am Adreß-Eingang 50 der Verknüpfungs-Stufe 51 erscheint zur Gravur eines Näpfchens ein gültiges Bilddatum von der einen Datenquelle und ein Maskendatum von der anderen Datenquelle. Dann liefert die Verknüpfungs-Stufe 51 als Aufzeichnungsdatum nur das gültige Bilddatum der einen Datenquelle, und die andere Datenquelle ist nicht an der Gravur beteiligt.

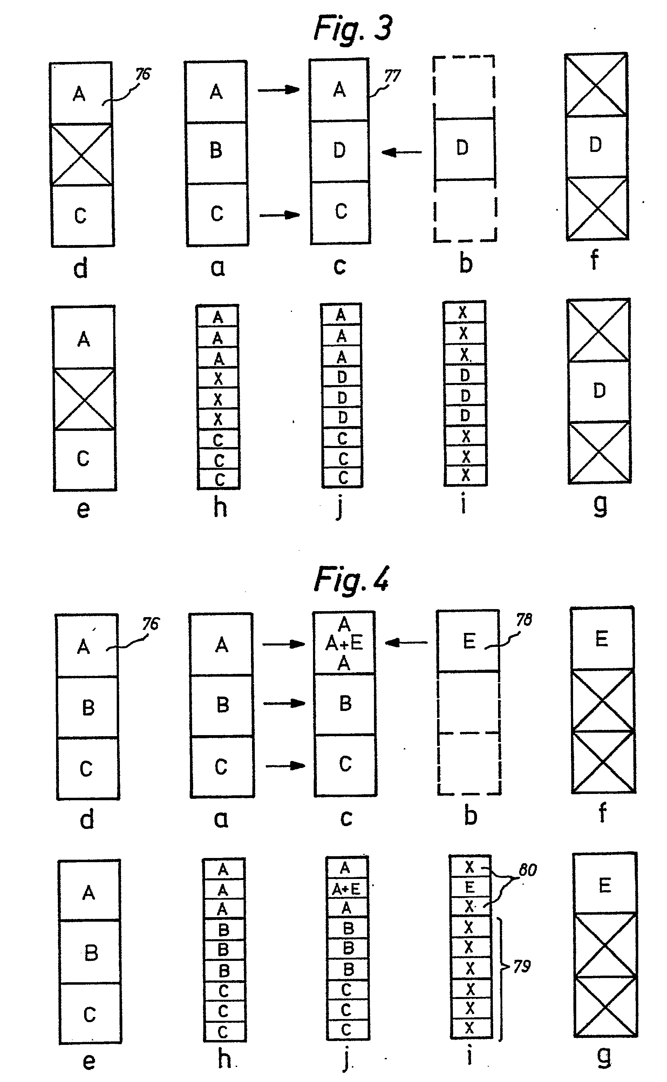

Wechseln sich nun die Maskendaten der einen und der anderen Datenquelle von zu gravierender Druckseite zu gravierender Druckseite ab, arbeitet die Gravieranlage im Schalt-Betrieb, die Verknüpfungs-Stufe 51 hat die Funktion eines Wechselschalters für Gravierinformationen und bei der Gravur des Druckzylinders 17 werden Druckseiten durch aktuelle Druckseiten ersetzt oder aktuelle Druckseiten auf dem Druckzylinder 17 ergänzt. Diese Funktionsweise wird noch einmal schematisch anhand der Fig. 3 erläutert.

Liefert eine der Datenquellen bei der Gravur beständig Maskendaten, so wird die Graviereinheit ausschließlich aus der anderen Datenquelle gespeist.

Beide Datenquellen werden an der Gravur eines Druckzylinders 17 beteiligt, wenn die Eingangs-Adresse der Verknüpfungs-Stufe 51 nur aus gültigen Bilddaten gebildet wird. Dann gibt die Verknüpfungs-Stufe 51 ein Aufzeichnungsdatum ab, das entweder aus den jeweilig gültigen Bilddaten beider Datenquellen mit gleicher oder ungleicher Gewichtung gebildet wird oder aber einen frei wählbaren Wert hat. In diesem Falle arbeitet die Gravieranlage im Überlagerungs-Betrieb, die Verknüpfungs-Stufe 51 führt die Funktion einer Mischung oder Überlagerung von Gravierinformationen aus, und bei der Gravur des Druckzylinders 17 wird beispielsweise eine aktuelle Schrift in den Hintergrund einer Druckseite eingraviert. Diese Funktionsweise wird noch einmal schematisch anhand der Fig. 4 erläutert.

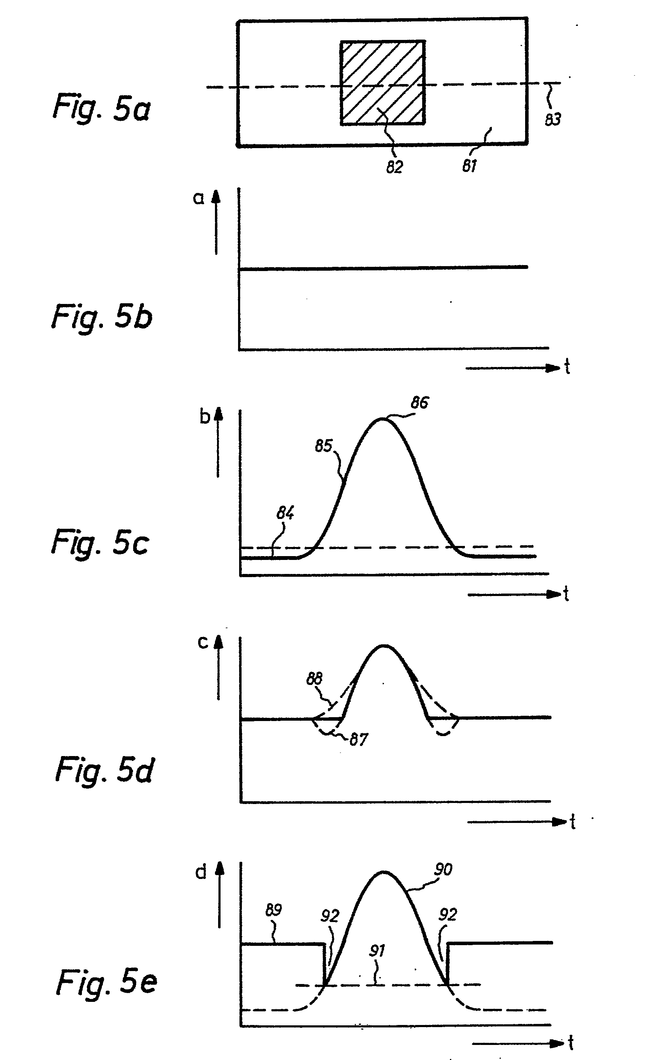

Durch die freie Zuordnung von Aufzeichnungsdaten und Eingangs-Adressen in der Verknüpfungs-Stufe 51 können die Werte der Aufzeichnungsdaten in vorteilhafter Weise so gewählt werden, daß sich zum Beispiel beim Einkopieren von Schrift in einen Hintergrund beliebige Verläufe vom Hintergrund zur Schrift im Konturenbereich der Schrift erzielen lassen. Dadurch können insbesondere störende Säume an einkopierten Schriften vermieden werden, wie dies in Fig. 5 näher dargestellt ist.

Im ·Falle, daß beide Datenquellen gleichzeitig Maskendaten anbieten, liefert die Verknüpfungs-Stufe 51 keine Aufzeichnungsdaten, und es wird eine Leerseite auf dem Druckzylinder 17 "graviert".

Die zuvor erläuterten Betriebsweisen der Verknüpfungs-Stufe 51 bei der Gravur von Druckzylindern werden nachfolgenden noch einmal in einer Tabelle zusammengefaßt.

| Datenquelle 1 liefert | Datenquelle 2 liefert | Aufzeichnungsdatum von |
|---|---|---|
| Bilddatum | Maskendatum | Datenquelle 1 |
| Maskendatum | Bilddatum | Datenquelle 2 |
| Bilddatum | Bilddatum | Datenquellen 1 + 2 |
| Maskendatum | Maskendatum | keine Aufzeichnungsdaten |

Die Erfindung ist nicht auf das beschriebene Ausführungsbeispiel für eine Gravieranlage beschränkt.

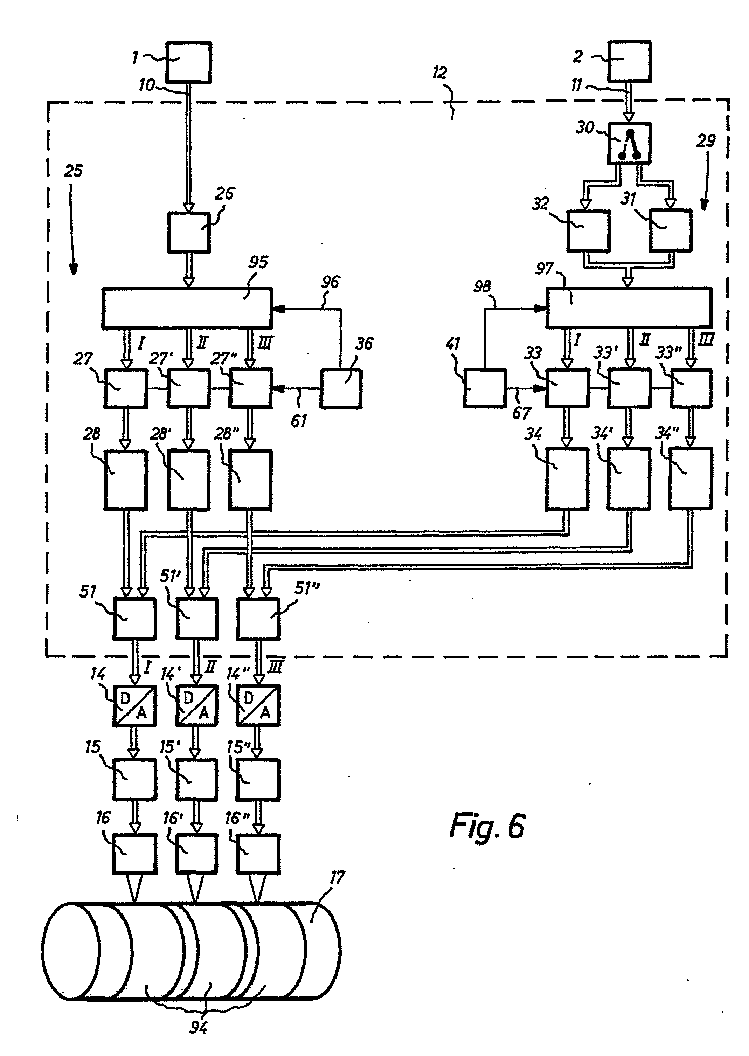

Auf der Abtasttrommel 3 des Abtasters 2 können gleichzeitig mehrere in Umfangsrichtung hintereinander angeordnete Vorlagen mit dem Abtastorgan 6 abgetastet werden. Der Abtaster 2 läßt sich auch mit mehreren Abtastorganen ausrüsten, so daß gleichzeitig mehrere auf der Abtasttrommel 3 in Axialrichtung nebeneinander angeordnete Vorlagen abgetastet werden können. In diesem Falle weist der Abtaster 2 zusätzliche Speicherregister auf, mit denen die Bilddaten der einzelnen Abtastkanäle im Multiplex-Betrieb aus dem Abtaster 2 ausgelesen und der Signalverarbeitungs-Schaltung 12 zugeführt werden. Die erfindungsgemäße selbsttätige Maskierung einer abgetasteten Vorlage durch unterschiedliche Interpretation der Dichtewerte der Vorlage anhand von Strich-Gradationen kann selbstverständlich auch für sich außerhalb der Gravieranlage Anwendung finden. Die dargestellte Gravieranlage arbeitet mit einem einzelnen Gravierorgan. Zur schnelleren Gravur von Druckzylindern ist es in der Praxis üblich, einen Druckzylinder in mehrere Abschnitte (Graviersträge) zu unterteilen und die einzelnen Graviersträge eines Druckzylinders gleichzeitig mit jeweils einem Gravierorgan zu gravieren. Auch in diesem Falle ist die Erfindung mit großem Vorteil anwendbar. Eine Gravieranlage mit mehreren Graviersträngen ist in Fig. 6 angedeutet.

Fig. 2 zeigt die Verläufe der in der Gradations-Stufe 32 der Gravieranlage nach Fig. 1 abgelegten Strich-Gradationen zur selbsttätigen Maskierung einer im Abtaster 2 abgetasteten Strich-Vorlage.

In Fig. 2 a ist der spezielle Gradations-Verlauf für Strich-Vorlagen mit positiven Strichelementen dargestellt, wobei unter positiven Strichelementen schwarze Strichelemente (schwarze Schrift) auf hellem Untergrund verstanden werden.

Die vom Abtaster 2 gebildeten Bilddaten sind die Eingangs-Bilddaten e der Strich-Gradation, die auf der Abszisse aufgetragen sind. Entsprechend der Digitalisierung des vom Abtastorgan 6 gewonnenen Bildsignals in Eingangs-Bilddaten e von 10 Bit-Auflösung durch den A/D-Wandler 8 umfassen die Eingangs-Bilddaten e einen Wertebereich von 0 bis $e_3 = 1023$, der die in der Strich-Vorlage ausgemessenen Dichtewerte wiedergibt. Abtastorgan 6 und A/D-Wandler 8 des Abtasters 2 sind so geeicht, daß bei Abtastung des Eichpunktes "Schwarz" in der Strich-Vorlage ein Eingangs-Bilddatum von $e_1 = 16$ (Schwarzwert) und bei Abtastung des Eichpunktes "Weiß" ein Eingangs-Bilddatum von $e_2 = 768$ (Weißwert) entstehen. Beim Überfahren der Kontur eines Strichelementes mit der Blende des Abtastorgans 6 "sieht" diese Grauwerte, und die Eingangs-Bilddaten nehmen entsprechend dem jeweiligen Schwarz/Weiß-Anteil in der Blende Werte zwischen $e_1 = 16$ und $e_2 = 768$ an (Graubereich). Dieser an sich zur Aufzeichnung von rein schwarz/weißen Strichelementen nicht erforderliche Graubereich dient im Tiefdruck zur verbesserten Wiedergabe von Konturen an Strichelementen. Wird dagegen der hellere Untergrund der Strich-Vorlage abgetastet, liefert der Abtaster 2 Bilddaten, die größer als $e_3 = 768$ sind.

Den Eingangs-Bilddaten e sind durch die Strich-Gradation bestimmte Ausgangs-Bilddaten a von 8 Bit innerhalb eines Wertebereiches von 0 bis $a_4 = 255$ zugeordnet, die auf der Ordinate aufgetragen sind.

Der Wertebereich der Eingangs-Bilddaten ist in einen Informations-Bereich 71 von 0 bis $e_2 = 768$ und in einen Masken-Bereich 72 von $e_2 = 768$ bis $e_3 = 1023$ unterteilt.

Erfindungsgemäß werden Eingangs-Bilddaten, die in den eingangsseitigen Informations-Bereich 71 fallen, als Gravierinformation (gültige Bilddaten) und Eingangs-Bilddaten, die in den Masken-Bereich 72 fallen, als Maskendaten (ungültige Bilddaten) interpretiert.

Die Umsetzung der Eingangs-Bilddaten des Informations-Bereiches 71 erfolgt entsprechend der Strich-Gradation in der Weise, daß bei Abtastung des Eichpunktes "Schwarz" das Ausgangs-Bilddatum $a_1 = 1$ und bei Abtastung des Eichpunktes "Weiß" das Ausgangs-Bilddatum $a_2 = 161$ gebildet wird. Dabei wird beim Ausgangs-Bilddatum $a_1 = 1$ ein tiefes Näpfchen (Schwarz) und beim Ausgangs-Bilddatum $a_2 = 161$ ein lichtes Näpfchen (Weiß) graviert. Der Zusammenhang zwischen Eingangs-Bilddaten und Ausgangs-Bilddaten wird durch den Verlauf der Gradationskurve zwischen den Eichpunkten bestimmt, der durch die jeweiligen Druckbedingungen festgelegt wird.

Eingangs-Bilddaten, die einen Wert größer als $e_2 = 768$ haben und damit in den Masken-Bereich 72 fallen, werden entsprechend dem speziellen Verlauf der Strich-Gradation ausgangsseitig in das Maskendatum $a_4 = 255$ umgewandelt, das außerhalb des Wertebereiches der Ausgangs-Bilddaten liegt und somit nicht als Gravierinformation interpretiert wird.

In Fig. 2 b ist der Gradations-Verlauf für Strich-Vorlagen mit negativen Strichelementen dargestellt, wobei unter negativen Strichelementen weiße Strichelemente (weiße Schrift) auf dunklem Untergrund verstanden werden.

Auch bei einer Strich-Vorlage mit negativen Strichelementen entstehen bei Abtastung des Eichpunktes "Schwarz" das EingangsBilddatum $e_1 = 16$, bei Abtastung des Eichpunktes "Weiß" das Eingangs-Bilddatum $e_2 = 768$ und bei Abtastung der weißen Strichelemente Eingangs-Bilddaten, die größer als $e_2 = 768$ sind. In diesem Falle ist der Wertebereich der Eingangs-Bilddaten e in einen Informations-Bereich 71 von $e_1 = 16$ bis $e_3 = 1023$ und in einen außerhalb des Informations-Bereiches 71 liegenden Masken-Bereich 72 von 0 bis $e_1 = 16$ unterteilt.

Erfindungsgemäß werden nun alle Dichtewerte der Strich-Vorlage, die größer als der Dichtewert des Eichpunktes "Schwarz" sind, als Vorlagenuntergrund interpretiert und die entsprechenden Eingangs-Bilddaten des Masken-Bereiches 72 durch die Strich-Gradation in das Maskendatum $a_4 = 255$ umgesetzt, während alle in den Informations-Bereich 71 fallenden Eingangs-Bilddaten dem Verlauf der Strich-Gradation nach in gültige Bilddaten des ausgangsseitigen Wertebereiches von $a_1 = 1$ bis $a_3 = 254$ umgewandelt werden.

In Fig. 2 c ist der Gradationsverlauf für Strich-Vorlagen mit gemischt positiven/negativen Strichelementen dargestellt.

Erfindungsgemäß wird nun ein mittlerer Dichtebereich der Strich-Vorlage zwischen den Dichtewerten des Eichpunktes "Schwarz" und des Eichpunktes "Weiß" als Vorlagenuntergrund interpretiert. Der Masken-Bereich 72 liegt damit innerhalb des ursprünglichen, zur besseren Konturenwiedergabe vorgesehenen Teils des Informations-Bereiches 71 der Strich-Gradationen für positive oder für negative Strichelemente. Dadurch wird der eingangsseitige Wertebereich in einen eingeschränkten Informations-Teilbereich 71′ für positive Strichelemente von 0 bis $e_2 = 300$, in den Masken-Bereich 72 von $e_2 = 300$ bis $e_3 = 500$ und in einen eingeschränkten Informations-Teilbereich 71″ für negative Strichelemente von $e_3 = 500$ bis $e_5 = 1023$ unterteilt. Der Dichteumfang des Masken-Bereiches 72 wird so festgelegt, daß alle Dichteschwankungen des Vorlagenuntergrundes in den Masken-Bereich 72 fallen. Ebenso wird der verfügbare ausgangsseitige Wertebereich von $a_1 = 1$ bis $a_5 = 254$ in einen ersten, eingeschränkten Teilbereich von $a_1 = 1$ bis $a_3 = 127$ für positive Strichelemente und in einen zweiten, eingeschränkten Teilbereich für negative Strichelemente von $a_3 = 120$ bis $a_5 = 254$ unterteilt. Diese Teilbereiche können gleich oder ungleich sein.

Eingangs-Bilddaten, die in den Informations-Teilbereich 71′ von 0 bis $e_2 = 300$ fallen, werden als gültige Bilddaten für positive Strichelemente gewertet und durch die Strich-Gradation in entsprechende Ausgangs-Bilddaten für positive Strichelemente von $a_1 = 1$ bis $a_2 = 80$ umgesetzt. Eingangs-Bilddaten, die in dem Masken-Bereich 72 von $e_2 = 300$ bis $e_3 = 500$ liegen, werden durch die Strich-Gradation in das Maskendatum $a_6 = 255$ umcodiert. Eingangs-Bilddaten, die in den Informations-Teilbereich 71″ von $e_3 = 500$ bis $e_5 = 1023$ fallen, werden durch die Strich-Gradation in Ausgangs-Bilddaten von $a_3 = 127$ bis $a_5 = 254$ umgesetzt.

Da bei der Strich-Gradation für gemischt positive/negative Strichelemente der Teilbereich der Ausgangs-Bilddaten für positive Strichelemente von $a_1 = 1$ bis $a_3 = 127$ gegenüber dem ursprünglichen Wertebereich von $a_1 = 1$ bis $a_3 = 254$ eingeschränkt und der entsprechende Teilbereich der Ausgangs-Bilddaten für negative Strichelemente von $a_3 = 128$ bis $a_5 = 254$ ebenfalls eingeschränkt und zusätzlich noch verschoben ist, muß die Einschränkung und die Verschiebung vor der Weiterverarbeitung der Bilddaten wieder rückgängig gemacht werden. Dazu ist in der Gravieranlage der Fig. 1 zwischen der Bildlinien-Speichereinrichtung 34 und der Verknüpfungs-Stufe 51 eine Decodier-Stufe 75 vorgesehen, die in Fig. 1 nur gestrichelt angedeutet ist, da sie nur im Falle der Strich-Gradation für gemischt positive/negative Strichelemente wirksam ist. Die Decodier-Stufe 75 enthält entsprechende Korrektur-Gradationen, die auch in die Verknüpfungs-Stufe 51 einprogrammiert sein können. Mit Hilfe der Korrektur-Gradation für positive Strichelemente werden zum Beispiel das Bilddatum $a_2 = 80$ in das ursprüngliche Bilddatum $a_2 = 161$ und das Bilddatum $a_3 = 127$ in das ursprüngliche Bilddatum $a_3 = 254$ sowie mit Hilfe der Korrektur-Gradation für negative Strichelemente das Bilddatum $a_3 = 127$ in das ursprüngliche Bilddatum $a_1 = 1$ und das Bilddatum $a_4 = 207$ in das ursprüngliche Bilddatum $a_2 = 161$ umcodiert.

Die in der Beschreibung der Fig. 2 genannten Werte sind selbstverständlich nur Beispiele, auf die die Erfindung nicht beschränkt ist.

Fig. 3 zeigt ein Schema für den Schalt-Betrieb der Gravieranlage, an dem diese Funktion noch einmal erläutert werden soll. In a) sind drei hintereinanderliegende Druckseiten A, B und C dargestellt, deren Bilddaten in der Speichereinrichtung 1 abgelegt sind. In b) ist eine aktuelle Druckseite D angedeutet, deren Bilddaten durch Abtastung der entsprechenden Druckseiten-Vorlagen im Abtaster 2 gewonnen werden. Bei der Gravur soll die aktuelle Druckseite D, die im Datenbestand der Speichereinrichtung 1 enthaltene Druckseite B ersetzen, so daß auf der Aufzeichnungsfläche 77 des Druckzylinders 17 die hintereinander liegenden Druckseiten A, D und C zu gravieren sind, wie dies in c) angedeutet ist. Das zugehörige Quellen-Zuordnungsschema für die Speichereinrichtung 1, das in dem Zuordnungs-Steuerwerk 36 abgelegt ist, ist in d) bzw. e) dargestellt. Das entsprechende Quellen-Zuordnungsschema für den Abtaster 2, das in dem Zuordnungs-Steuerwerk 41 einprogrammiert ist, ist in f) bzw. g) angegeben. In den Quellen-Zuordnungsschemata sind den Druckseiten entsprechende Teilflächen 76 zugeordnet. Die Buchstaben in den Teilflächen 76 sollen angeben, daß die betreffenden Druckseiten graviert werden sollen, während die durchkreuzten Teilflächen 76 besagen, daß die zugehörigen Druckseiten bei der Gravur unberücksichtigt bleiben sollen. In h) ist eine aus den gültigen Bilddaten der Speichereinrichtung 1 für die Druckseiten A und C und aus Maskendaten X gebildeten Bildlinie dargestellt, die in der Bildlinien-Speichereinrichtung 28 der Gravieranlage abgelegt ist. Die Darstellung j) zeigt eine aus den gültigen Bilddaten des Abtasters 2 für die Druckseite D und ebenfalls aus Maskendaten X zusammengesetzte Bildlinie, die in der Bildlinien-Speichereinrichtung 34 zwischengespeichert ist. Die Reihenfolge von Bilddaten und Maskendaten in jeder Bildlinie wird durch das zugehörige Quellen-Zuordnungsschema e) bzw. g) bestimmt. Bild- und Maskendaten beider Bildlinien gelangen an die Verknüpfungs-Stufe 51 der Gravieranlage. Wie bereits erläutert, werden im Schalt-Betrieb jeweils nur die gültigen Bilddaten durch die Verknüpfungs-Stufe 51 als Aufzeichnungsdaten weitergeleitet, so daß die in j) dargestellte Bildlinie auf dem Druckzylinder 17 graviert wird.

Fig. 4 zeigt das entsprechende Schema für den Überlagerungs-Betrieb der Gravieranlage. In a) sind wiederum die hintereinander liegenden Druckseiten A, B und C dargestellt, deren Bilddaten in der Speichereinrichtung 1 abgelegt sind. In b) ist eine Strich-Vorlage 78 mit einer aktuellen Schrift E angedeutet. Die Bilddaten der Strich-Vorlage 78 werden mit Hilfe des Abtasters 2 gewonnen. Bei der Gravur soll die aktuelle Schrift E der Strich-Vorlage 78, die nicht im Datenbestand der Speichereinrichtung 1 enthalten ist, in den Hintergrund der Druckseite A einkopiert werden, während die Druckseiten B und C unverändert graviert werden sollen. Die Anordnung der zu gravierenden Druckseiten A, B und C auf dem Druckzylinder 17 ist in c) dargestellt, wobei auf der Druckseite A durch "A" ein reiner Hintergrundbereich und durch "A+E" ein Überlagerungsbereich für Hintergrund und Schrift symbolisiert werden soll. Das Quellen-Zuordnungsschema für die Speichereinrichtung 1 ist wiederum in d) bzw. e) und das betreffende Quellen-Zuordnungsschema für den Abtaster 2 in f) bzw. g) dargestellt. In h) ist eine aus den in der Speichereinrichtung 1 abgelegten Bilddaten A, B und C der Druckseiten A, B und C gebildete Bildlinie dargestellt, die in der Bildlinien-Speichereinrichtung 28 zwischengespeichert ist. Die Darstellung i) zeigt eine aus den vom Abtaster 2 gewonnenen Bilddaten E für die Schrift E der Strich-Vorlage 78 und aus Maskendaten X zusammengestellte Bildlinie, die in der Bildlinien-Speichereinrichtung 34 abgelegt ist. Der Unterschied zur Maskendaten-Erzeugung bei dem zuvor erläuterten Schalt-Betrieb besteht nun darin, daß lediglich die Maskendaten 79 durch das Quellen-Zuordnungsschema des Abtasters 2 erzeugt werden, während die Maskendaten 80 innerhalb der Strich-Vorlage 78 mit Hilfe der erfindungsgemäße Strich-Gradation entstehen. Schließlich zeigt j) noch die zugehörige gravierte Bildlinie für die Druckseiten-Anordnung nach c).

Fig. 5 zeigt eine grafische Darstellung, anhand der die Vorteile der freien Zuordnung von Aufzeichnungsdaten zu den Eingangs-Adressen der Verknüpfungs-Stufe 51 beispielsweise beim Einkopieren von Strichelementen, insbesonderen von Schriften, in den Hintergrund einer Druckseite erläutert werden sollen. In Fig. 5 a ist eine den Hintergrund bildende Druckseite 81 dargestellt, in den ein Strichelement 82 einer Strich-Vorlage einkopiert werden soll. Die Linie 83 deutet die Richtung einer zu gravierenden Bildlinie bzw. die Gravierrichtung an.

Das in Fig. 5 b dargestellte Diagramm zeigt den Verlauf der von der Speichereinrichtung 1 gelieferten Bildsignalwerte a für den Hintergrund der Druckseite 81 mit konstanter Dichte, aufgetragen über der Bildlinie 83 bzw. über der Zeit t. Das Diagramm in Fig. 5 c zeigt den Verlauf der durch Abtastung der Strich-Vorlage gewonnenen Bildsignalwerte b über der Entsprechenden Bildlinie 83, wobei sich der Verlauf 84 bei Abtastung des Vorlagenuntergrundes, der Verlauf 85 bei Abtastung der Kontur des Strichelementes 82 und der Verlauf 86 bei Abtastung des Strichelementes 82 selbst ergibt. Die gestrichelte Linie soll die Masken-Schwelle der Strich-Gradation andeuten, wobei bei unterhalb der Masken-Schwelle liegenden Bildsignalwerten b die Aufzeichnungssignalwerte c den Bildsignalwerten a entsprechen und bei oberhalb der Masken-Schwelle liegenden Bildsignalwerten b die Aufzeichnungssignalwerte c aus einer Verknüpfung der Bildsignalwerte a und b gebildet werden. Aus den Bildsignalwerten a und b der Speichereinrichtung 1 und des Abtasters 2 werden die Eingangs-Adressen der Verknüpfungs-Stufe 51 gebildet unter denen jeweils zugeordnete Aufzeichnungssignalwerte c abgelegt sind. Dabei läßt sich die Zuordnung von Aufzeichnungssignalwerten c und Eingangs-Adressen in der Verknüpfungs-Stufe 51 so treffen, daß in vorteilhafter Weise jeder gewünschte Übergang vom Hintergrund auf das Strichelement und umgekehrt erzeugt werden kann, wodurch die Reproduktionsqualität erheblich gesteigert wird. Das Diagramm der Fig. 5 d, in dem entsprechend gewählte Aufzeichnungssignalwerte c über der Bildlinie 83 aufgetragen sind, zeigt verschiedene Möglichkeiten für Übergänge an einem Strichelement 82. Durch den Verlauf 87 läßt sich beispielsweise eine Schrift auf einem Untergrund betonen, während durch den Verlauf 88 weichere Übergänge erzielt werden. In vorteilhafter Weise werden insbesondere störende Säume an Konturen vermieden, die beim herkömmlichen Einkopieren mit Hilfe von Steuermasken auftreten. Fig. 5 e zeigt als Stand der Technik das Ergebnis beim Einkopieren mit einer Steuermaske, welche das Bildsignal 89 des Hintergrundes und das Bildsignal 90 eines einzukopierenden Strichelements bei einer bestimmten Schwelle 91 umschaltet. In diesem Falle entstehen an den Konturen des einkopierten Strichelementes störende Säume 92.

Fig. 6 zeigt eine Weiterbildung der Gravieranlage nach Fig. 1, mit der gleichzeitig mehrere Gravierstränge, im dargestellten Beispiel drei Gravierstränge 94 auf dem Druckzylinder 17 graviert werden können. Die Gravieranlage weist in diesem Falle drei separate Gravierkanäle I, II und III für die drei Gravierstränge 94 auf. Jeder Signalweg 25 bzw. 29 ist gegenüber dem Ausführungsbeispiel in Fig. 1 entsprechend der zusätzlichen Anzahl von zwei Graviersträngen um zwei Masken-Register 27′ und 27″ bzw. 33′ und 33″ und um zwei Bildlinien-Speichereinrichtungen 28′ und 28″ bzw. 34′ und 34″ erweitert.

Jedem Gravierkanal I, II und III ist ein Masken-Register 27, 27′ bzw. 27″ und eine Bildlinien-Speichereinrichtung 28, 28′ bzw. 28″ des Signalweges 25 sowie ein entsprechendes Masken-Register 33, 33′ bzw. 33″ und eine entsprechende Bildlinien-Speichereinrichtung 34, 34′ bzw. 34″ des Signalweges 29 zugeordnet. Jeder Gravierkanal I, II und III weist ferner eine Verknüpfungs-Stufe 51, 51′ bzw. 51″, einen D/A-Wandler 14, 14′ bzw. 14″, einen Gravierverstärker 15, 15′ bzw. 15″ und ein Gravierorgan 16, 16′ bzw. 16″ auf.

Die in den Zuordnungs-Steuerwerken 36 und 41 abgelegten Quellen-Zuordnungsschemata sind auf die betreffende Anzahl von Graviersträngen erweitert und legen zusätzlich fest, in welchem Gravierstrang oder in welchen Graviersträngen die Druckseiten graviert werden sollen.

Die Speichereinrichtung 1 enthält nunmehr die Bilddaten für sämtliche Gravierstränge. Zur Verteilung der aus der Speichereinrichtung 1 ausgelesenen Bilddaten auf die Gravierkanäle I, II und III des Signalweges 25 ist eine Verteiler-Stufe 95 vorgesehen, die von dem Zuordnungs-Steuerwerk 36 über eine Leitung 96 in Abhängigkeit des dort abgelegten Quellen-Zuordnungsschemas gesteuert wird. Ebenso ist eine Verteiler-Stufe 97 für den Signalweg 29 vorgesehen, mit der die vom Abtaster 2 gelieferten Bilddaten auf die Gravierkanäle I, II und III verteilt werden. Die Verteiler-Stufe 97 wird über eine Leitung 98 vom Zuordnungs-Steuerwerk 41 in Abhängigkeit des dort gespeicherten Quellen-Zuordnungs-Schemas umgeschaltet.

Das erfindungsgemäße Verfahren ermöglicht in vorteilhafter Weise eine universelle Betriebsweise der Gravieranlage. Bei der Gravur können beispielsweise in auswählbaren Graviersträngen Druckseiten durch aktuelle Druckseiten ersetzt bzw. aktuelle Druckseiten ergänzt werden, während sich in denselben Graviersträngen oder in anderen ausgewählten Graviersträngen gleichzeitig Schriften in Druckseiten einkopieren lassen.

## Patentansprüche

1. Verfahren zur bildpunkt- und bildlinienweisen Aufzeichnung von Druckformen, bei dem die Bildsignalfolgen von mindestens zwei Signalquellen (1; 2) gewonnen und die Bildsignalfolgen durch Maskensignale beeinflußt werden und bei dem mit Hilfe der beeinflußten Bildsignalfolgen eine Aufzeichnungssignalfolge zur Steuerung eines Aufzeichnungsorgans (16) für die Druckform (17) erzeugt wird, wobei die Fläche der Druckform (17) in aufzuzeichnende Teilflächen (22) unterteilt ist, dadurch gekennzeichnet, daß

a) die erste Signalquelle (1) die Bildsignalfolge von mindestens einer auf der Druckform (17) aufzuzeichnenden Teilfläche (22) und die zweite Signalquelle (2) die Bildsignalfolge von mindestens einer aktuell aufzuzeichnenden Teilfläche (22) liefert, die während der Aufzeichnung auf der Druckform (17) ergänzt werden und/oder Teilflächen der ersten Signalquelle (1) ersetzen soll,

b) aus jeder Bildsignalfolge eine Signalfolge gewonnen wird, welche die aufzuzeichnenden Bildsignalwerte der zugehörigen Bildsignalfolge für die innerhalb der aufzuzeichnenden Teilfläche (22) liegenden Bildpunkte enthält und in welcher die nicht aufzuzeichnenden Bildsignalwerte der zugehörigen Bildsignalfolge für die außerhalb der aufzuzeichnenden Teilfläche (22) liegenden Bildpunkte jeweils durch einen Maskensignalwert ersetzt werden,

c) die Signalfolgen zu einer resultierenden Signalfolge kombiniert werden,

d) jeder möglichen Signalwert-Kombination der resultierenden Signalfolge ein Aufzeichnungssignalwert zugeordnet wird und

e) bei der Aufzeichnung die jeweiligen Signalwert-Kombinationen der resultierenden Signalfolge die zugeordneten Aufzeichnungssignalwerte als Aufzeichnungssignalfolge zur Steuerung des Aufzeichnungsorgans (16) aufrufen.

2. Verfahren nach Anspruch 1, dadurch gekennzeichnet, daß der Maskensignalwert außerhalb des jeweils gültigen Bereiches der Bildsignalwerte liegt.

3. Verfahren nach Anspruch 1 oder 2, dadurch gekennzeichnet, daß die Teilflächen (22) aufzuzeichnenden Druckseiten entsprechen.

4. Verfahren nach einem der Ansprüche 1 bis 3, dadurch gekennzeichnet, daß mindestens eine der Bildsignalfolgen gespeichert ist und bei der Aufzeichnung ausgelesen wird.

5. Verfahren nach einem der Ansprüche 1 bis 4, dadurch gekennzeichnet, daß mindestens eine der anderen Bildsignalfolgen während der Aufzeichnung durch optoelektronische Abtastung einer Vorlage (7) gewonnen wird.

6. Verfahren nach Anspruch 5, dadurch gekennzeichnet, daß die abgetastete Vorlage (7) eine Druckseite ist, die während der Aufzeichnung auf der Druckform (17) ergänzt werden oder andere Druckseiten ersetzen soll.

7. Verfahren nach Anspruch 5, dadurch gekennzeichnet, daß die abgetastete Vorlage (7) eine Strich-Vorlage mit Strichelementen (Schrift) ist, die während der Aufzeichnung in Druckseiten einkopiert werden soll.

8. Verfahren nach einem der Ansprüche 1 bis 7, dadurch gekennzeichnet, daß

a) eine Signalwert-Kombination der resultierenden Signalfolge einen Bildsignalwert der einen Signalfolge und den Maskensignalwert der anderen Signalfolge enthält und

b) der dieser Signalwert-Kombination zugeordnete Aufzeichnungssignalwert von dem Bildsignalwert der einen Signalfolge abhängig ist, wodurch der betreffende Bildsignalwert der einen Bildsignalfolge aufgezeichnet und der entsprechende Bildsignalwert der anderen Bildsignalfolge unterdrückt wird.

9. Verfahren nach Anspruch 8, dadurch gekennzeichnet, daß der zugeordnete Aufzeichnungssignalwert dem Bildsignalwert der einen Bildsignalfolge entspricht.

10. Verfahren nach einem der Ansprüche 1 bis 7, dadurch gekennzeichnet, daß

a) eine Signalwert-Kombination der resultierenden Signalfolge aus Bildsignalwerten beider Signalfolgen besteht, und

b) der dieser Signalwert-Kombination zugeordnete Aufzeichnungssignalwert aus den Bildsignalwerten beider Signalfolgen mit gleicher oder ungleicher Gewichtung berechnet wird, worduch ein aus den entsprechenden Bildsignalwerten beider Bildsignalfolgen gebildeter Aufzeichnungssignalwert aufgezeichnet wird.

11. Verfahren nach einem der Ansprüche 1 bis 7, dadurch gekennzeichnet, daß

a) eine Signalwert-Kombination der resultierenden Signalfolge aus den Bildsignalwerten beider Signalfolgen besteht,

b) die Bildsignalwerte beider Signalfolgen miteinander verglichen werden und

c) der Signalwert-Kombination jeweils der größere oder kleinere Bildsignalwert als Aufzeichnungssignalwert zugeordnet wird.

12. Verfahren nach einem der Ansprüche 1 bis 7, dadurch gekennzeichnet, daß ein einer Signalwert-Kombination der resultierenden Signalfolge zuzuordnender Aufzeichnungssignalwert zumindest innerhalb eines vorgebbaren Wertebereichs frei wählbar ist.

13. Verfahren nach einem der Ansprüche 1 bis 12, dadurch gekennzeichnet, daß die Signalwert-Kombinationen der resultierenden Signalfolge die Eingangs-Adressen eines Speichers (51) bilden, unter denen die zugeordneten Aufzeichnungssignalwerte abrufbar gespeichert sind.

14. Verfahren zur bildpunkt- und bildlinienweisen Aufzeichnung von Druckformen, bei dem die Bildsignalfolge für mindestens zwei Signalquellen (1; 2) gewonnen und die Bildsignalfolgen durch Maskensignal beeinflußt werden und bei dem mit Hilfe der beeinflußten Bildsignalfolgen eine Aufzeichnungssignalfolge zur Steuerung eines Aufzeichnungsorgans (16) für die Druckform (17) erzeugt wird, wobei die Fläche der Druckform (17) in aufzuzeichnende Teilflächen (22) unterteilt ist, dadurch gekennzeichnet, daß

a) die erste Signalquelle (1) die Bildsignalfolge von mindestens einer auf der Druckform (17) aufzuzeichnenden Teilfläche (22) liefert und die Bildsignalfolge der zweiten Signalquelle (2) durch optoelektronische Abtastung mindestens einer Strich-Vorlage (7) von der Größe einer Teilfläche (22) gewonnen wird, deren Information während der Aufzeichnung in mindestens eine aufzuzeichnende Teilfläche (22) der ersten Signalquelle (1) einkopiert werden soll,

b) aus jeder Bildsignalfolge eine Signalfolge gewonnen wird, welche die aufzuzeichnenden Bildsignalfolgen für die innerhalb der aufzuzeichnenden Teilflächen (22) liegenden Bildpunkte enthält und in welche die nicht aufzuzeichnenden Bildsignalwerte der zugehörigen Bildsignalfolge für die außerhalb der aufzuzeichnenden Teilfläche (22) liegenden Bildpunkte jeweils durch einen Maskensignalwert ersetzt werden,

c) bei der Gewinung der der zweiten Signalquelle (2) zugeordneten Signalfolge zusätzlich Bildsignalfolge für innerhalb der Strich-Vorlage (7) liegende Bildpunkte durch Maskensignalwerte ersetzt werden, wenn die betreffenden Bildsignalwerte einen vorgebbaren Dichtebereich der Strich-Vorlage (7) als Maskenbereich repräsentieren,

d) die Signalfolgen zu einer resultierenden Signalfolge kombiniert werden,

e) jeder möglichen Signalwert-Kombination der resultierenden Signalfolge ein Aufzeichnungssignalwert zugeordnet wird, und

f) bei der Aufzeichnung die jeweiligen Signalwert-Kombinationen der resultierenden Signalfolge die zugeordneten Aufzeichnungssignalwerte als Aufzeichnungssignalfolge zur Steuerung des Aufzeichnungsorgans (16) aufrufen.

15. Verfahren nach Anspruch 14, dadurch gekennzeichnet, daß der vorgebbare Masken-Bereich die Dichtewerte des Vorlagenuntergrundes umfaßt, wodurch Strichelemente wiedergebende Bildsignalwerte aufgezeichnet und den Vorlagenuntergrund wiedergebende Bildsignalwerte unterdrückt werden.

16. Verfahren nach Anspruch 14 oder 15, bei dem die Strichelemente in der Strich-Vorlage größere Dichtewerte als der Vorlagenuntergrund aufweisen, dadurch gekennzeichnet, daß der Masken-Bereich alle Dichtewerte der Strich-Vorlage (7) umfaßt, die kleiner als der Dichtewert des Vorlagen-Eichpunktes für "Weiß" sind.

17. Verfahren nach Anspruch 14 oder 15, bei dem die Strichelemente kleinere Dichtewerte als der Vorlagenuntergrund aufweisen, dadurch gekennzeichnet, daß der Masken-Bereich alle Dichtewerte der Strich-Vorlage (7) umfaßt, die größer als der Dichtewert des Vorlagen-Eichpunktes für "Schwarz" sind.

18. Verfahren nach Anspruch 14 oder 15, bei dem die Strichelemente kleinere und größere Dichtewerte als der Vorlagenuntergrund aufweisen, dadurch gekennzeichnet, daß der Masken-Bereich zwischen die Dichtewerte der Vorlagen-Eichpunkte für "Weiß" und "Schwarz" gelegt wird.

19. Verfahren nach einem der Ansprüche 14 bis 18, dadurch gekennzeichnet, daß der Dichteumfang des Masken-Bereiches mindestens so groß wie die maximale Dichtedifferenz im Vorlagenuntergrund gewählt wird.

20. Verfahren nach einem der Ansprüche 14 bis 19, dadurch gekennzeichnet, daß die Signalfolge aus der durch Vorlagenabtastung erzeugten Bildsignalfolge mit Hilfe einer Gradations-Kurve gewonnen wird, die in den Masken-Bereich fallende Bildsignalwerte der Bildsignalfolge in den Maskensignalwert umsetzt und die außerhalb des Masken-Bereiches liegende Bildsignalwerte entsprechend dem Verlauf der Gradations-Kurve modifiziert.

21. Verfahren nach einem der Ansprüche 1 bis 19, dadurch gekennzeichnet, daß die Signalfolgen bildlinienweise zwischengespeichert werden.

22. Verfahren zur bildpunkt- und bildlinienweisen Aufzeichnung von Druckformen, bei dem eine Bildsignalfolge gewonnen, die Bildsignalfolge durch ein Maskensignal beeinflußt und mit Hilfe der beeinflußten Bildsignalfolge eine Aufzeichnungssignalfolge zur Steuerung eines Aufzeichnungsorgans (16) für die Druckform (17) erzeugt wird, dadurch gekennzeichnet, daß

a) die Bildsignafolge durch optoelektronische Abtastung einer Strichelemente aufweisenden Strich-Vorlage gewonnen wird, wobei die Bildsignalwerte der Bildsignalfolge ein Maß für die Dichtewerte der abgetasteten Strich-Vorlage sind,

b) aus der Bildsignalfolge eine Signalfolge gewonnen wird, welche die Bildsignalwerte der Bildsignalfolge enthält, wenn diese Bildsignalwerte Dichtewerte der aufzuzeichnenden Strichelemente repräsentieren und in welche die Bildsignalwerte jeweils durch einen Maskensignalwert ersetzt werden, wenn diese Bildsignalwerte einen vorgebbaren Dichtebereich des nicht aufzuzeichnenden Vorlagenuntergrundes als Masken-Bereich repräsentieren, wobei der Maskensignalwert außerhalb des jeweiligen gültigen Bereiches der Bildsignalwerte liegt,

c) jedem möglichen Bildsignalwert der Signalfolge ein vom Bildsignalwert abhängiger Aufzeichnungssignalwert und dem Maskensignalwert ein unabhängiger Aufzeichnungssignalwert zugeordnet wird und

d) bei der Aufzeichnung die Bildsignalwerte der Signalfolge die zugeordneten Aufzeichnungssignalwerte als Aufzeichnungssignalfolge zur Steuerung des Aufzeichnungsorgans (16) aufrufen.

23. Einrichtung zur bildpunkt- und bildlinienweisen Aufzeichnung von Druckformen, bestehend aus

a) mindestens zwei Signalquellen (1; 2) zur Gewinnung von Bildsignalfolgen,

b) Steuerwerken (35; 40) zum Aufrufen der Bildsignalfolgen aus den Signalquellen (1; 2),

c) an die Signalquellen (1; 2) angeschlossenen Gradations-Stufen (26; 31),

d) einer mit den Gradations-Stufen (26; 31) verbundenen Signalverarbeitungs-Schaltung zur Bildung einer Aufzeichnungssignalfolge und aus

e) einem an die Signalverarbeitungs-Schaltung angeschlossenen Aufzeichnungsorgan (16) für die Druckform (17), dadurch gekennzeichnet, daß

f) die erste Signalquelle (1) die Bildsignalfolge von mindestens einer auf der Druckform (17) aufzuzeichnenden Teilfläche (22) und die zweite Signalquelle (2) die Bildsignalfolge von mindestens einer aktuell aufzuzeichnenden Teilfläche (22) liefert, die während der Aufzeichnung auf der Druckform (17) ergänzt werden und/oder Teilflächen der ersten Signalquelle (1) ersetzen soll, und

g) die Signalvorbereitungs-Schaltung folgende Komponenten enthält

g1) an die Gradations-Stufen (26; 31) angeschlossene Masken-Stufen (27; 33) zur Bildung von Signalfolgen aus den Bildsignalfolgen,

g2) mit den Masken-Stufen (27; 33) verbundene Zuordnungs-Steuerwerke (36; 41) zur Steuerung der Masken-Stufen (27; 33) und

g3) eine an die Masken-Stufen (27; 33) angeschlossene Verknüpfungs-Stufe (51) zur Zuordnung von Aufzeichnungssignalwerten zu Signalwert-Kombinationen der Signalfolgen.

24. Einrichtung zur bildpunkt- und bildlinienweisen Aufzeichnung von Druckformen, bestehend aus

a) mindestens zwei Signalquellen (1; 2) zur Gewinnung von Bildsignalfolgen,

b) Steuerwerken (35; 40) zum Aufrufen der Bildsignalfolgen aus Signalquellen (1; 2),

c) an die Signalquellen (1; 2) angeschlossenen Gradations-Stufen (26; 31),

d) einer mit den Gradations-Stufen (26; 31) verbundenen Signalverarbeitungs-Schaltung zur Bildung einer Aufzeichnungssignalfolge und aus

e) einem an die Signalverarbeitungs-Schaltung angeschlossenen Aufzeichnungsorgan (16) für die Druckform (17), dadurch gekennzeichnet, daß

f) die erste Signalquelle (1) die Bildsignalfolge von mindestens einer auf der Druckform (17) aufzuzeichnenden Teilfläche (22) liefert und die Bildsignalfolge der zweiten Signalquelle (2) durch optoelektronische Abtastung mindestens einer Strich-Vorlage (7) von der Größe einer Teilfläche (22) gewonnen wird, deren Information während der Aufzeichnung in mindestens eine aufzuzeichnende Teilfläche (22) der ersten Signalquelle (1) einkopiert werden soll, und

g) die Signalverarbeitungs-Schaltung folgende Komponenten aufweist:

g1) an die Gradations-Stufen (26; 31) angeschlossene Masken-Stufen (27; 33) zur Bildung von Signalfolgen aus den Bildsignalfolgen,

g2) eine an die zweite Signalquelle (2) und an die dieser zugeordneten Masken-Stufe (33) angeschlossene Unterscheidungs-Stufe (32) für Dichtewerte der abgetasteten Strich-Vorlage (7),

g3) mit den Masken-Stufen (27; 33) verbundene Zuordnungs-Steuerwerke (36; 41) zur Steuerung der Masken-Stufen (27; 33) sowie

g4) eine an die Masken-Stufen (27; 33) angeschlossene Verknüpfungs-Stufe (51) zur Zuordnung von Aufzeichnungssignalwerten zu Siganlwert-Kombinationen der Signalfolgen.

25. Einrichtung nach Anspruch 23 oder 24, dadurch gekennzeichnet, daß die erste Signalquelle (1) eine Speichereinrichtung für die eine Bildsignalfolge und die zweite Signalquelle (2) ein Abtaster zur Gewinnung der anderen Bildsignalfolge durch optoelektronische Abtastung einer Vorlage ist.

26. Einrichtung nach einem der Ansprüche 23 bis 25, dadurch gekennzeichnet, daß die Verknüpfungs-Stufe (51) als adressierbarer Tabellen-Speicher für Aufzeichnungssignalwerte ausgebildet ist.

27. Einrichtung nach einem der Ansprüche 23 bis 26, dadurch gekennzeichnet, daß Bildlinien-Speichereinrichtungen (28; 34) und Speichersteuerwerke (37; 42; 45) vorgesehen sind zur bildlinienweisen Zwischenspeicherung von Signalwerten.

## Claims

1. A method for recording by image dot and image line of printing forms, in which the image signal sequences are obtained from at least two signal sources (1; 2) and the image signal sequences are influenced by mask signals, and in which by means of the influenced image signal sequences a recording signal sequence is generated for the control of a recording member (16) for the printing form (17), wherein the area of the printing form (17) is subdivided into partial areas (22) which are to be recorded, characterized in that

a) the first signal source (1) delivers the image signal sequence of at least one partial eare (22) which is to be recorded on the printing form (17) and the second signal source (2) delivers the image signal sequence of at least one partial area (22) which is currently to be recorded, which during the recording on the printing form (17) is to be completed and/or is to replace partial areas of the first signal source (1),

b) from each image signal sequence a signal sequence is obtained, which contains the image signal values of the associated image signal sequence which are to be recorded for the image dots lying within the partial area (22) which is to be recorded, and in which the image signal values of the associated image signal sequence which are not to be recorded, for the image dots lying within the partial area (22) which is to be recorded are replaced in each case by a mask signa value,

c) the signal sequences are combined into a resulting signal sequence,

d) a recording signal value is associated with each possible signal value combination of the resulting signal sequence and

e) in the recording the respective signal value combinations of the resulting signal sequence call up the associated recording signal values as recording signal sequence to control the recording member (16).

2. Method according to Claim 1, characterized in that the mask signal value lies outside the respectively current range of the image signal values.

3. Method according to Claim 1 or 2, characterized in that the partial areas (22) correspond to printing pages which are to be recorded.

4. Method according to one of claims 1 to 3, characterized in that at least one of the image signal sequences is stored and is read out in the recording.

5. Method according to one of Claims 1 to 4, characterized in that at least one of the other image signal sequences is obtained during the recording through optoelectronic scanning of an original (7).

6. Method according to Claim 5, characterized in that the scanned original (7) is a printing page which during the recording on the printing form (17) is to be completed or is to replace other printing pages.

7. Method according to Claim 5, characterized in that the scanned original (7) is a line original with line elements (script), which during the recording is to be copied into printing pages.

8. Method according to Claim 1 to 7, characterized in that

a) a signal value combination of the resulting signal sequence contains an image signal value of one signal sequence and the mask signal value of the other signal sequence and

b) the recording signal value associated with this signal value combination is dependent on the image signal value of one signal sequence, whereby the relevant image signal value of the one image signal sequence is recorded and the corresponding image signal value of the other image signal sequence is suppressed.

9. Method according to Claim 8, characterized in that the associated recording signal value corresponds to the image signal value of one image signal sequence.

10. Method according to one of Claims 1 to 7, characterized in that

a) a signal value combination of the resulting signal sequence consists of image signal values of both signal sequences, and

b) the recording signal value associated with this signal value combination is calculated from the image signal values of both signal sequences with identical or non-identical weighting, whereby a recording signal value is recorded which is formed from the corresponding image signal values of both image signal sequences.

11. Method according to one of Claims 1 to 7, characterized in that

a) a signal value combination of the resulting signal sequence consists of image signal values of both signal sequences,

b) the image signal values of both signal sequences are compared with each other and

c) the signal value combination is associated in each case with the greater or smaller image signal value as recording signal value.

12. Method according to one of Claims 1 to 7, characterized in that a recording signal value which is to be assocoated with a signal value combination of the resulting signal sequence is freely selectable within at least a specifiable range of values.

13. Method according to one of Claims 1 to 12, characterized in that the signal value combinations of the resulting signal sequence form the input addresses of a memory (51), under which the associated recording signal values are stored so as to be able to be recalled.

14. Method for the recording by image dot and image line of printing forms, in which the image signal sequence is obtained for at least two signal sources (1; 2) and the image signal sequences are influenced by mask signal and in which by means of the influenced image signal sequences a recording signal sequence is generated to control a recording member (16) for the printing form (17), wherein the area of the printing form (17) is subdivided into partial areas (22) which are to be recorded, characterized in that

a) the first signal source (1) delivers the image signal sequence of at least one partial area (22) which is to be recorded on the printing form (17) and the image signal sequence of the second signal source (2) is obtained by optoelectronic scanning of at least one line original (7) of the size of a partial area (22), the information of which is to be copied, during the recording, into at least one partial area (22) of the first signal source (1) which is to be recorded,

b) from each image signal sequence, a signal sequence is obtained which contains the image signal values of the associated image signal sequences, which are to be recorded, for the image dots lying within the partial areas (22) which are to be recorded, and in which the image signal values of the associated image signal sequence, which are not to be recorded, for the image dots lying outside the partial area (22) which is to be recorded, are replaced in each case by a mask signal value,

c) on obtaining the signal sequence associated with the second signal source (2), additionally image signal values of the image signal sequence for image dots lying within the line original (7) are replaced by mask signal values, when the image signal values concerned represent a specificable density range of the line original (7) as mask range,

d) the signal sequences are combined into a resulting signal sequence,

e) a recording signal value is associated with every possible signal value combination of the resulting signal sequence, and

f) in the recording, the respective signal value combinations of the resulting signal sequence call up the associated recording signal values as recording signal sequence to control the recording member (16)

15. Method according to Claim 14, characterized in that the specifiable mask range comprises the density values of the background of the original whereby image signal values reproducing line elements are recorded and image signal values reproducing the background of the original are suppressed.

16. Method according to Claim 14 or 15, in which the line elements in the line original have greater density values than the background of the original, characterized in that the mask range comprises all density values of the line original (7) which are smaller than the density value of the gauge point of the original for "white".

17. Method according to Claim 14 or 15, in which the line elements have smaller density values than the background of the original, characterized in that the mask range comprises all density values of the line original (7) which are greater than the density value of the gauge point of the original for "black".

18. Method according to Claim 14 or 15, in which the line elements have smaller and greater density values than the backgrund of the original, characterized in that the mask range is set between the density values of the gauge points of the original for "white" and "black".

19. Method according to one of Claims 14 to 18, characterized in that the density scope of the mask range is selected to be at least as great as the maximum density difference in the background of the original.

20. Method according to one of Claims 14 to 19, characterized in that the signal sequence is obtained from the image signal sequence generated by scanning of the original, by means of a gradation curve, which converts the image signal values of the image signal sequence falling within the mask range into the mask signal value and modifies the image signal values lying outside the mask range according to the path of the gradation curve.

21. Method according to one of Claims 1 to 19, characterized in that the signal sequences are stored intermediately by image line.

22. Method for the recording by image dot and image line of printing forms, in which an image signal sequence is obtained, the image signal sequence is influenced by a mask signal and by means of the influenced image signal sequence a recording signal sequence is generated to control a recording member (16) for the printing form (17), characterized in that

a) the image signal sequence is obtained through optoelectronic scanning of a line original having line elements, wherein the image signal values of the image signal sequence are a measurement for the density values of the scanned line original,

b) from the image signal sequence, a signal sequence is obtained which contains the image signal values of the image signal sequence, when these image signal values represent density values of the line elements which are to be recorded, and in which the image signal values in each case are replaced by a mask signal value, when these image signal values represent a specifiable density range of the background of the original, which is not to be recorded, as mask range, wherein the mask signal value lies outside the respective current range of the image signal values,

c) a recording signal value dependent on the image signal value is associated with every possible image signal value of the signal sequence, and an independent recording signal value is associated with the mask signal value and

d) in the recording, the image signal values of the signal sequence call up the associated recording signal values as recording signal sequence to control the recording member (16).

23. Apparatus for the recording by image dot and image line of printing forms, consisting of

a) at least two signal sources (1; 2) for obtaining image signal sequences,

b) control systems (35; 40) for calling up the image signal sequences from the signal sources (1; 2),

c) gradation steps (26; 31) connected to the signal sources (1; 2),

d) a signal processing circuit, connected with the gradation steps (26; 31) for the formation of a recording signal sequence and of

e) a recording member (16), connected to the signal processing circuit, for the printing form (17), characterized in that

f) the first signal source (1) delivers the image signal sequence of at least one partial area (22) which is to be recorded on the printing form (17) and the second signal source (2) delivers the image signal sequence of at least one partial area (22) which is currently to be recorded, which during the recording on the printing form (17) is to be completed and/or is to replace partial areas of the first signal source (1), and

g) the signal preparation circuit contains the following components

g1) mask steps (27; 33), connected to the gradation steps (26; 31) for the formation of signal sequences from the image signal sequences,

g2) associating control systems (36; 41), connected with the mask steps (27; 33), for the control of the mask steps (27; 33) and

g3) a linking step (51), connected to the mask steps (27; 33) for the association of recording signal values to signal value combinations of the signal sequences.

24. Apparatus for the recording by image dot and image line of printing forms, consisting of

a) at least two signal sources (1; 2) for obtaining image signal sequences,

b) control systems (35; 40) for calling up the image signal sequences from signal sources (1; 2),

c) gradation steps (26; 31) connected to the signal sources (1; 2),

d) a signal processing circuit, connected with the gradation steps (26; 31), for the formation of a recording signal sequence and of

e) a recording member (16), connected to the signal processing circuit, for the printing form (17), characterized in that

f) the first signal source (1) delivers the image signal sequence of at least one partial area (22) which is to be recorded on the printing form (17), and the image signal sequence of the second signal source (2) is obtained by optoelectronic scanning of at least one line original (7) of the size of a partial area (22), the information of which is to be copied, during the recording, into at least one partial area (22) of the first signal source (1) which is to be recorded, and

g) the signal processing circuit has the following components:

g1) mask steps (27; 33), connected to the gradation steps (26; 31) for the formation of signal sequences from the image signal sequences,

g2) a differentiation step (32), connected to the second signal source (2) and to the mask step (33) associated therewith, for density values of the scanned line original (7),

g3) associating control systems (36; 41), connected with the mask steps (37; 33), for the control of the mask steps (27; 33) and also

g4) a linking step (51), connected to the mask steps (27; 33), for the association of recording signal values to signal value combinations of the signal sequences.

25. Apparatus according to Claim 23 or 24, characterized in that the first signal source (1) is a memory apparatus for one image signal sequence and the second signal source (2) is a scanner for obtaining the other image signal sequence through optoelectronic scanning of an original.

26. Apparatus according to one of Claims 23 to 25, characterized in that the linking step (51) is constructed as an addressable table memory for recording signal values.

27. Apparatus according to one of Claims 23 to 26, characterized in that image line memory apparatus (28; 34) and memory control systems (37; 42; 45) are provided for the intermediate storage of signal values by image line.

**Revendications**

1. Procédé pour l'enregistrement, par points d'image et par lignes d'image, de formes d'impression, procédé dans lequel les successions de signaux d'image sont obtenues à partir d'au moins deux sources de signaux (1, 2) et sont influencées par des signaux de masqueage, et dans lequel, à l'aide des successions de signaux d'image ainsi influencées, une succession de signaux d'enregistrement est engendrée pour commander un organe d'enregistrement (16) de la forme d'impression (17), la surface de cette forme d'impression (17) étant subdivisée en surfaces partielles d'enregistrement (22), procédé caractérisé en ce que:

a) la première source de signaux (1) fournit la succession de signaux d'image d'au moins une surface partielle (22) à enregistrer sur la forme d'impression (17), et la seconde source de signaux (2) fournit la succession de signaux d'image d'au moins une surface partielle (22) à enregistrer actuellement et qui doit être complétée et/ou doit remplacer des surfaces partielles de la première source de signaux (1) lors de l'enregistrement sur la forme d'impression (17),

b) à partir de chaque succession de signaux d'image est obtenue une succession de signaux qui contient les valeurs de signaux d'image à enregistrer de la succession de signaux d'image qui lui est associée pour les points d'image situés à l'intérieur de la surface partielle (22) à enregistrer, et dans laquelle les valeurs de signaux d'image, qui ne doivent pas être enregistrées, de la succession de signaux d'image associée pour les points d'image situés à l'extérieur de la surface partielle (22) sont respectivement remplacées par une valeur de signal masqué.

c) les successions de signaux sont combinées pour obtenir une succession de signaux résultante,

d) une valeur de signal d'enregistrement est associée à chaque combinaison possible de valeurs de signaux de la succession de signaux résultante,

e) lors de l'enregistrement, les combinaisons respectives de valeurs de signaux de la succession de signaux résultante appellent les valeurs de signaux d'enregistrement associées en tant que succession de signaux d'enregistrement pour commander l'organe d'enregistrement (16).

2. Procédé selon la revendication 1, caractérisé en ce que la valeur de signal masqué se situe en dehors de la zone respectivement admissible des valeurs de signaux d'image.

3. Procédé selon la revendication 1 ou la revendication 2, caractérisé en ce que les surfaces partielles (22) correspondent aux pages d'impression à enregistrer.

4. Procédé selon une des revendications 1 à 3, caractérisé en ce qu'au moins une des successions de signaux d'image est mémorisée et extraite lors de l'enregistrement.

5. Procédé selon une des revendications 1 à 4, caractérisé en ce qu'au moins une des autres successions de signaux d'image est obtenue pendant l'enregistrement par exploration opto-électronique d'un original (7).

6. Procédé selon la revendication 5, caractérisé en ce que l'original (7) ainsi exploré est une page d'impression qui doit être complétée ou qui doit remplacer d'autres pages d'impression lors de l'enregistrement sur la forme d'impression (17).

7. Procédé selon la revendication 5, caractériisé en ce que l'original (7) ainsi exploré est un original au trait, avec des éléments au trait (graphisme), qui doit être copié sur les pages d'impression lors de l'enregistrement.

8. Procédé selon une des revendications 1 à 7, caractérisé en ce que:

a) une combinaison de valeurs de signaux de succession de signaux résultantes comprend une valeur de signal d'image de l'une des successions de signaux et la valeur de signal de masquage de l'autre succession de signaux, et

b) la valeur de signal d'enregistrement associée à cette combinaison de valeurs de signaux dépend de la valeur de signal d'image de l'une des successions de signaux, la valeur de signal d'image correspondante de l'une des successions de signaux d'image étant alors enregistrée, tandis que la valeur de signal d'image correspondante de l'autre succession de signaux d'image est supprimée.

9. Procédé selon la revendication 8, caractérisé en ce que la valeur de signal d'enregistrement associée correspond à la valeur de signal d'image de la première succesion de signaux d'image.

10. Procédé selon une des revendications 1 à 7, caractérisé en ce que:

a) une combinaison de valeurs de signaux de successions de signaux résultantes est constituée par des valeurs de signaux d'image de deux successions de signaux, et

17

b) la valeur de signal d'enregistrement associée à cette combinaison de valeurs de signaux est calculée à partir des valeurs de signaux d'image des deux successions de signaux avec une pondération identique ou différente, grâce à quoi une valeur de signal d'enregistrement, formée à partir des valeurs de signaux d'image de signaux des deux successions de signaux d'image, est enregistrée.

11. Procédé selon une des revendications 1 à 7, caractérisé en ce que:

a) une combinaison de valeurs de signaux de successions de signaux résultantes est constituée par des valeurs de signaux d'image des deux successions de signaux,

b) les valeurs de signaux d'image des deux successions de signaux sont comparées entre elles, et

c) la valeur de signal d'image la plus grande ou la plus grande ou la plus petite des deux est respectivement associée à la combinaison de valeurs de signaux en tant que valeur de signal d'enregistrement.

12. Procédé selon une des revendications 1 à 7, caractérisé en ce qu'une valeur de signal d'enregistrement devant être associée à une combinaison de valeurs de signaux des successions de signaux résultantes, est susceptible d'être librement choisie, tout au moins à l'intérieur d'une gamme de valeurs susceptible d'être prédéfinie.

13. Procédé selon une des revendications 1 à 12, caractérisé en ce que les combinaisons de valeurs de signaux des successions de signaux résultantes constituent les adresses d'entrée d'une mémoire (51), adresses sous lesquelles les valeurs de signal d'enregistrement associés sont mémorisées et peuvent être appelées.

14. Procédé pour l'enregistrement, par points d'image et par lignes d'image et par lignes d'image, de formes d'impression, procédé dans lequel les successions de signaux d'image sont obtenues à partir d'au moins deux sources de signaux (1, 2) et sont influencées par des signaux de masquage, et dans lequel, à l'aide des successions de signaux d'image ainsi influencées, une succession de signaux d'enregistrement est engendrée pour commander un organe d'enregistrement (16) de la forme d'impression (17), la surface de cette forme d'impression (17) étant subdivisée en surfaces partielles d'enregistrement (22), proédé caractérisé en ce que:

a) la première source de signaux (1) fournit la succession des signaux d'image d'au moins une surface partielle (22) devant être enregistrée sur la forme d'impression (17) et la succession des signaux d'image de la seconde source de signaux (2) est obtenue par exploration opto-électronique d'au moins un original au trait (7) de la grandeur d'une surface partielle (22) et dont l'information doit être copiée lors de l'enregistrement sur au moins une surface partielle (22), à enregistrer, de la première source de signaux (1).

b) à partir de chaque succession de signaux d'image est obtenue une succession de signaux, qui comprend les valeurs de signaux d'image de la succession de signaux d'image associée devant être enregistrée pour les points d'image se situant à l'intérieur de la surface partielle (22) à enregistrer, et dans laquelle les valeurs de signaux d'image, ne devant pas être enregistrées, de la succession de signaux d'image associée, pour les points d'image se situant à l'extérieur de la surface partielle à enregistrer, sont respectivement remplacées par une valeur de signal de masquage,

c) lors de l'obtention de la succession de signaux associée à la seconde source de signaux (2), des valeurs de signaux d'image de la succession de signaux d'image pour des points d'image se situant à l'intérieur de l'original au trait (7), sont, en outre, remplacées par des valeurs de signal de masquage, lorsque les valeurs de signal d'image concernées représentent, en tant que zone de masquage, une zone de densité, susceptible d'être prédéfinie, de l'original au trait (7),

d) les successions de signaux sont combinées pour constituer une succession de signaux résultante,

e) une valeur de signal d'enregistrement est associée à chaque combinaison possible des valeurs de signaux de la succession de signaux résultante,

f) lors de l'enregistrement, les combinaisons respectives de valeurs de signaux de la succession de signaux résultante appelent les valeurs de signaux d'enregistrement associées, en tant que succession de signaux d'enregistrement pour commande l'organe d'enregistrement (16).

15. Procédé selon la revendication 14, caractérisé en ce que la zone de masquage susceptible d'être prédéfinie comprend les valeurs de densité du fond de l'original, grâce à quoi les valeurs de signal d'image reproduisant les élément au trait sont enregistrées et les valeurs de signal d'image reproduisant le fond de l'original, sont supprimées.

16. Procédé selon la revendication 14 ou la revendication 15, dans lequel les éléments au trait sur l'original au trait comportent des valeurs de densité plus grandes que le fond de l'original, procédé caractérisé en ce que la zone de masquage comprend toutes les valeurs de densité de l'original au trait (7) qui sont plus petites que la valeur de densité du point d'étalonnage de l'original pour le "blanc".

17. Procédé selon la revendication 14 ou la revendication 15, dans lequel les éléments au trait comportent des valeurs de densité plus petites que le fond de l'original, procédé caractérisé en ce que la zone de masquage comprend toutes les valeurs de densité de l'original au trait (7) qui sont plus grandes que la valeur de densité du point d'étalonnage de l'original pour le "noir".

18. Procédé selon la revendication 14 ou la revendication 15, dans lequel les éléments au trait comportent des valeurs de densité plus petites et plus grandes que le fond de l'original, procédé caractérisé en ce que la zone de masquage est placée entre les valeurs de densité des points d'étalonnage de l'original pour le "blanc" et le "noir".

19. Procédé selon une des revendications 14 à 18, caractérisé en ce que la grandeur de la densité de la zone de masquage est au moins égale à la différence de densité dans le fond de l'original.

20. Procédé selon une des revendications 14 à 19, caractérisé en ce que la succession de signaux est obtenue à partir de la succession de signaux d'image engendrée par exploration de l'original, à l'aide d'une courbe de gradation qui remplace les valeurs de signal d'image tombant dans la zone de masquage par la valeur du signal de masquage, et qui modifie, de façon correspondante au tracé de la courbe de gradation, les valeurs de signal d'image se situant à l'extérieur de la zone de masquage.

21. Procédé selon une des revendications 1 à 19, caractérisé en ce que les successions de signaux sont mémorisées temporairement par lignes d'image.

22. Procédé pour l'enregistrement, par points d'image et par lignes d'image, de formes d'impression, procédé dans lequel est obtenue une succession de signaux d'image, cette succession de signaux d'image étant influencée par un signal de masquage, et une succession de signaux d'enregistrement étant engendrée à l'aide de la succession de signaux d'image ainsi influencée, pour commander un organe d'enregistrement (16) pour la forme d'impression (17), procédé caractérisé en ce que:

a) la succession de signaux d'image est obtenue par exploration opto-électronique d'un original au trait comportant des éléments au trait, les valeurs de signaux d'image de la succession de signaux d'image constituant une mesure pour les valeurs de densité de l'original au trait ainsi exploré,

b) à partir de la succession de signaux d'image est obtenue une succession de signaux qui comprend les valeurs de signaux d'image de la succession de signaux d'image, lorsque ces valeurs de signaux d'image représentent des valeurs de densité des éléments au trait à enregistrer, et dans laquelle les valeurs de signaux d'image sont respectivement remplacées par une valeur de signal de masquage, lorsque ces valeurs de signaux d'image représentent, en tant que zone de masquage, une zone de densité susceptible d'être prédéfinie du fond, ne devant pas être enregistré, de l'original, la valeur du signal de masquage se situant à l'extérieur de la zone respectivement admissible des valeurs de signaux d'image,

c) à chaque valeur possible de signal d'image de la succession de signaux est associée une valeur de signal d'enregistrement dépendante de la valeur de signal d'image et à la valeur du signal de masquage est associée une valeur de signal d'enregistrement indépendante,

d) lors de l'enregistrement, les valeurs de signaux d'image de la succession de signaux appellent les valeurs de signaux d'enregistrement associées, en tant que succession de signaux d'enregistrement pour commander l'organe d'enregistrement (16).

23. Installation pour l'enregistrement, par points d'image et par lignes d'image, de formes d'impression, cette installation comportant:

a) au moins deux sources de signaux (1, 2) pour obtenir des successions de signaux d'image,

b) des moyens de commande (35, 40) pour appeler les successions de signaux d'image à partir des sources de signaux (1, 2),

c) des étages de gradation (26, 31) raccordés aux sources de signaux (1, 2),

d) un circuit de traitement de signaux, raccordé aux étages de gradation (26, 31) pour former une succession de signaux d'enregistrement, et

e) d'un organe d'enregistrement (16) pour la forme d'impression (17), cet organe étant raccordé au circuit de traitement de signaux, installation caractérisée en ce que:

f) la première source de signaux (1) fournit la succession de signaux d'image d'au moins une surface partielle (22) à enregistrer sur la forme d'impression (17), et la seconde source de signaux (2) fournit la succession de signaux d'image d'au moins une surface partielle (22) devant être enregistrée actuellement et qui, lors de l'enregistrement sur la forme d'impression (17), doit être complétée et/ou remplacer les surfaces partielles de la première source de signaux (1),

g) le circuit de traitement de signaux comprend les composants suivants:

g1) des étages de masquage (27, 33), raccordés aux étages de gradation (26, 31), pour la formation de successions de signaux à partir des successions de signaux d'image,

g2) des moyens de commande d'association (36, 41), reliés aux étages de masquage (27, 33), pour commander ces étages de masquage (27, 33),

g3) un étage de combinaison (51), raccordé aux étages de masquage (27, 33), pour associer des valeurs de signaux d'enregistrement à des combinaisons de valeurs de signaux des successions de signaux.

24. Installation pour l'enregistrement, par points d'image et par lignes d'image, de formes d'impression, cette installation comportant:

a) au moins deux sources de signaux (1, 2) pour obtenir des successions de signaux d'image,

b) des moyens de commande (35, 40) pour appeler les successions de signaux d'image à partir des sources de signaux (1, 2),

c) des étages de gradation (26, 31) raccordés aux sources de signaux (1, 2),

d) un circuit de traitement de signaux, relié aux étages des gradation (26, 31), pour former une succession de signaux d'enregistrement,

e) un organe d'enregistrement (16) pour la forme d'impression (17), raccordé au circuit d'enregistrement de signaux, installation caractérisée en ce que:

f) la première source de signaux (1) fournit la succession de signaux d'image d'au moins une surface partielle (22) devant être enregistrée sur la forme d'impression (17), et la succession de signaux d'image de la seconde source de signaux (2) est obtenue par exploration opto-électronique d'au moins un original au trait (7) de la grandeur d'une surface partielle (22), et dont l'information doit être copiée, lors de l'enregistrement, sur au moins une surface partielle (22), à enregistrer, de la première source de signaux (1),

g) le circuit de traitement de signaux comporte les composants suivants:

g1) des étages de masquage (27, 33), raccordés aux étages de gradation (26, 31) pour former des successions de signaux à partir des successions de signaux d'image,

g2) un étage de discrimination (32), raccordé à la seconde source de signaux (2) et à l'étage de masquage (33) associé à cette source, pour discriminer des valeurs de densité de l'original au trait exploré (7),

g3) des moyens de commande d'association (36, 41), reliés aux étages de masquage (27, 33), pour commander ces étages de masquage (27, 33),

g4) un étage de combinaison (51), raccordé aux étages de masquage (27, 33), pour associer des valeurs de signaux d'enregistrement aux combinaisons de valeurs de signaux des successions de signaux.

25. Installation selon la revendication 23 ou la revendication 24, caractérisée en ce que la première source de signaux (1) est un dispositif de mémorisation pour l'une des successions de signaux d'image, et la seconde source de signaux (2) un dispositif d'exploration pour obtenir l'autre succession de signaux d'image par exploration opto-électronique d'un original.

26. Installation selon une des revendications 23 à 25, caractérisée en ce que l'étage de combinaison (51) revêt la forme d'une mémoire à tableaux adressable pour les valeurs de signaux d'enregistrement.

27. Installation selon une des revendications 23 à 26, caractérisée en ce qu'il est prévu des dispositifs de mémorisation de lignes d'image (28, 34) et des moyens de commande de mémoires (37, 42, 45) pour la mémorisation temporaire, par lignes d'image, de valeur de signaux.

*Fig.1*

Fig. 2a

Fig. 2b

Fig. 2c

## Fig. 3

## Fig. 4

Fig. 5a

Fig. 5b

Fig. 5c

Fig. 5d

Fig. 5e

Fig. 6